(19) Europäisches Patentamt / European Patent Office / Office européen des brevets

(11) **EP 4 391 434 A1**

(12) **EUROPEAN PATENT APPLICATION**
published in accordance with Art. 153(4) EPC

(43) Date of publication:
**26.06.2024 Bulletin 2024/26**

(21) Application number: **21954095.2**

(22) Date of filing: **30.12.2021**

(51) International Patent Classification (IPC):
**H04L 5/00** (2006.01)        **H04W 76/27** (2018.01)

(52) Cooperative Patent Classification (CPC):
**H04L 5/00; H04W 72/04; H04W 76/27**

(86) International application number:
**PCT/CN2021/142916**

(87) International publication number:
**WO 2023/019860 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2021 PCT/CN2021/113222**

(71) Applicant: **GUANGDONG OPPO MOBILE
TELECOMMUNICATIONS
CORP., LTD.
Dongguan, Guangdong 523860 (CN)**

(72) Inventors:
• **ZHAO, Zhenshan**
  **Dongguan, Guangdong 523860 (CN)**
• **SHI, Zhihua**
  **Dongguan, Guangdong 523860 (CN)**
• **ZHANG, Shichang**
  **Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **WIRELESS COMMUNICATION METHOD AND TERMINAL DEVICE**

(57)    Embodiments of the present application provide a wireless communication method and a terminal device, which can select an optimal spatial transmitting filter between a transmitting end terminal and a receiving end terminal. The wireless communication method comprises: a first terminal device uses a spatial transmitting filter to transmit M CSI-RSs to a second terminal device, wherein the M CSI-RSs are used for selecting a target spatial transmitting filter, the M CSI-RSs correspond to multiple CSI-RS resources in a target CSI-RS resource set, and M is a positive integer.

**200**

transmitting, by a first terminal device, M CSI-RSs to a second terminal device through a spatial domain transmission filter; where the M CSI-RSs are configured to select a target spatial domain transmission filter; the M CSI-RSs correspond to multiple CSI-RS resources in a target CSI-RS resource set, and M is a positive integer — S210

receiving, by the second terminal device, the M CSI-RSs sent through the spatial domain transmission filter by the first terminal device — S220

FIG. 13

**Description**

**TECHNICAL FIELD**

The present disclosure relates to the field of communication technologies, and in particular to a wireless communication method and a terminal device.

**BACKGROUND**

In order to enhance the transmission rate of the sidelink communication system, the use of millimeter-wave bands in the sidelink transmission system is considered, and in the sidelink millimeter-wave transmission, the way of selecting an optimal spatial domain transmission filter between the transmitting end terminal and a receiving end terminal is the problem required to be solved.

**SUMMARY OF THE DISCLOSURE**

The present disclosure provides a wireless communication method and a terminal device, to select an optimal spatial domain transmission filter between a transmitting end terminal and a receiving end terminal.

In a first aspect, provided is a wireless communication method, including:

transmitting, by a first terminal device, M channel state information reference signals (CSI-RSs) to a second terminal device through a spatial domain transmission filter; wherein the M CSI-RSs are configured to select a target spatial domain transmission filter;

wherein the M CSI-RSs correspond to a plurality of CSI-RS resources in a target CSI-RS resource set, and M is a positive integer.

In a second aspect, provided is a wireless communication method, including:
receiving, by a second terminal device, M channel state information reference signals (CSI-RSs) transmitted by a first terminal device through a spatial domain transmission filter; wherein the M CSI-RSs are configured to select a target spatial domain transmission filter; the M CSI-RSs correspond to a plurality of CSI-RS resources in a target CSI-RS resource set, and M is a positive integer.

In a third aspect, provided is a terminal device, being a first terminal device, including:

a communication unit, configured to transmit M channel state information reference signals (CSI-RSs) to a second terminal device through a spatial domain transmission filter; wherein the M CSI-RSs are configured to select a target spatial domain transmission filter;

wherein the M CSI-RSs correspond to a plurality of CSI-RS resources in a target CSI-RS resource set, and M is a positive integer.

In a fourth aspect, provided is a terminal device, being a second terminal device, including:
a communication unit, configured to receive M channel state information reference signals (CSI-RSs) transmitted by a first terminal device through a spatial domain transmission filter; wherein the M CSI-RSs are configured to select a target spatial domain transmission filter; the M CSI-RSs correspond to a plurality of CSI-RS resources in a target CSI-RS resource set, and M is a positive integer.

In a fifth aspect, provided is a terminal device, including a processor and a memory; wherein the memory is configured to store a computer program, and the processor is configured to call and run the computer program stored in the memory to perform the method in the first aspect.

In a sixth aspect, provided is a terminal device, including a processor and a memory; wherein the memory is configured to store a computer program, and the processor is configured to call and run the computer program stored in the memory to perform the method in the second aspect.

In a seventh aspect, provided is an apparatus to perform the method in the first aspect or the second aspect.

Specifically, the apparatus includes a processor configured to call and run a program from a memory, to cause a device arranged with the chip to perform the method in the first aspect or the second aspect.

In an eighth aspect, provided is a computer-readable storage medium, storing a computer program; wherein the computer program is configured to be executed by a computer to perform the method in the first aspect or the second aspect.

In a ninth aspect, provided is a computer program product, including a computer program instruction; wherein the computer program instruction is configured to be executed by a computer to perform the method in the first aspect or the second aspect.

In a tenth aspect, provided is a computer program, configured to be executed by a computer to perform the method in the first aspect or the second aspect.

With the above technical solution, it is possible to select an optimal spatial domain transmission filter between a transmitting end terminal and a receiving end terminal.

## BRIEF DESCRIPTION OF THE DRAWINGS

FIG. 1 is a schematic view of a communication system architecture applied by some embodiments of the present disclosure.

FIG. 2 is a schematic view of another communication system architecture applied by some embodiments of the present disclosure.

FIG. 3 is a schematic view of a sidelink communication within a network coverage provided by the present disclosure.

FIG. 4 is a schematic view of a sidelink communication partially covered by network provided by the present disclosure.

FIG. 5 is a schematic view of a sidelink communication outside a network coverage provided by the present disclosure.

FIG. 6 is a schematic view of a sidelink communication in the presence of a central control node provided by the present disclosure.

FIG. 7 is a schematic view of a unicast sidelink communication provided by the present disclosure.

FIG. 8 is a schematic view of a multicast sidelink communication provided by the present disclosure.

FIG. 9 is a schematic view of a broadcast sidelink communication provided by the present disclosure.

FIG. 10 is a schematic view of a slot structure in an NR-V2X provided by the present disclosure.

FIG. 11 is schematic views of using an analog beam and with not using an analog beam provided by the present disclosure.

FIG. 12 is a schematic view of a TCI state configuring a PDSCH provided by the present disclosure.

FIG. 13 is a flowchart of wireless communication method according to some embodiments of the present disclosure.

FIG. 14 is a schematic view of a spatial domain transmission filter according to some embodiments of the present disclosure.

FIG. 15 is a schematic view of transmitting a CSI-RS using a spatial domain transmission filter according to some embodiments of the present disclosure.

FIGS. 16 to 21 are schematic views of contents contained in a first information according to some embodiments of the present disclosure.

FIG. 22 is a schematic view of a MAC CE carrying a first information according to some embodiments of the present disclosure.

FIG. 23 is a schematic view of another MAC CE carrying a first information according to some embodiments of the present disclosure.

FIG. 24 is a flowchart of determining an optimal spatial domain transmission filter according to some embodiments of the present disclosure.

FIG. 25 is a schematic block view of a terminal device according to some embodiments of the present disclosure.

FIG. 26 is a schematic block view of another terminal device according to some embodiments of the present disclosure.

FIG. 27 is a schematic block view of a communication device according to some embodiments of the present disclosure.

FIG. 28 is a schematic block view of an apparatus according to some embodiments of the present disclosure.

FIG. 29 is a schematic block view of a communication system according to some embodiments of the present disclosure.

## DETAILED DESCRIPTION

The technical solutions in the embodiments of the present disclosure will be described below in conjunction with the accompanying drawings in the embodiments of the present disclosure, and it is clear that the described embodiments are a part of the embodiments of the present disclosure and not all of the embodiments. With respect to the embodiments in the present disclosure, all other embodiments obtained by those skilled in the art without making creative labor fall within the scope of the present disclosure.

The technical solutions of the embodiments of the present disclosure can be applied to various communication systems, such as a global system of mobile communication (GSM) system, a code division multiple access (CDMA) system, a wideband code division multiple access (WCDMA) system, a general packet radio service (GPRS), a long-term evolution (LTE) system, an advanced long-term evolution (LTE-A) system, a new radio (NR) system, an NR evolution system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a fifth-Generation (5G) system, or other communication systems.

Typically, a conventional communication system supports a limited number of connections and is easy to implement. However, as communication technologies evolve, mobile communication systems will support not only traditional communication but also, for example, device to device (D2D) communication, machine to machine (M2M) communication, machine type communication (MTC), vehicle to vehicle (V2V) communication, or vehicle to everything (V2X) communication, etc., and embodiments of the present disclosure may also be applied to these communication systems.

In some embodiments, the communication system in the embodiments of the present disclosure may be applied in a carrier aggregation (CA) scenario, or a dual connectivity (DC) scenario, or a standalone (SA) deployment scenario.

In some embodiments, the communication system in the embodiments of the present disclosure may be applied to an unauthorized spectrum, where the unauthorized spectrum may be considered shared spectrum; or, the communication system in the embodiments of the present disclosure may be applied to an authorized spectrum, where the authorized spectrum may be considered an unshared spectrum.

The present disclosure describes various embodiments in conjunction with a network device and a terminal device. The terminal device may be referred to as a user equipment (UE), an access terminal, a subscriber unit, a subscriber station, a mobile station, a mobile platform, a remote station, a remote terminal, a mobile device, a user terminal, a terminal, a wireless communication device, a user agent, or a user device, etc.

In the embodiments of the present disclosure, the terminal device may be a station (ST) in WLAN, which may be a cellular phone, a cordless phone, a session initiation protocol (SIP) phone, a wireless local loop (WLL) station, a personal digital assistant (PDA) device, a handheld device or computing device with wireless communication capabilities, or other processing devices connected to wireless modems, an in-vehicle device, a wearable device, a terminal device in next-generation communication systems such as NR network, a terminal device in future-evolved public land mobile networks (PLMN), etc.

In the embodiments of the present disclosure, the terminal device may be deployed on land, including indoors or outdoors, handheld, wearable, or vehicle-mounted; on water (e.g., on ships, etc.); and in the air (e.g., on airplanes, balloons, and satellites, etc.).

In the embodiments of the present disclosure, the terminal device may be a mobile phone, a tablet computer (Pad), a computer with a wireless transceiver function, a virtual reality (VR) terminal device, an augmented reality (AR) terminal device, a wireless terminal device in industrial control, a wireless terminal device in unmanned driving, a wireless terminal device in remote medical care, a wireless terminal device in smart grid, a wireless terminal device in transportation safety, a wireless terminal device in a smart city, or a wireless terminal device in a smart home.

As an example and not as a limitation, in the embodiments of the present disclosure, the terminal device may be a wearable device. The wearable device may be referred to as a wearable smart device, which is a general term for applying wearable technology to intelligently design and develop wearable devices for daily wear, such as glasses, gloves, watches, clothing, and shoes. The wearable device is a portable device that can be worn directly on the body or integrated into the user's clothing or accessories. The wearable device is a hardware device to realize powerful functions through software support as well as data interaction and cloud interaction. Broadly speaking, the wearable smart devices include full-featured, large-sized devices that do not rely on a smartphone to achieve complete or partial functionality, such as a smartwatch or smart glasses, etc., as well as devices that focus on a certain type of application functionality and need to be used in conjunction with other devices such as a smartphone, e.g., various types of smart bracelets and smart jewelry that perform physical signs monitoring.

In the embodiments of the present disclosure, the network device may be a device for communicating with a mobile device, and the network device may be an access point (AP) in WLAN, a base transceiver station (BTS) in GSM or CDMA, or a base station (NodeB, NB) in WCDMA, or may be an evolutional base station (evolutional Node B, eNB or eNodeB) in LTE, or a relay station or access point, or an in-vehicle device, a wearable device, and a network device or base station (gNB) in an NR network or in a future evolved PLMN network or in an NTN network, and so on.

By way of example and not as a limitation, in the embodiments of the present disclosure, the network device may have a mobile characteristic, e.g., the network device may be a mobile device. In some embodiments of the present disclosure, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments of the present disclosure, the network device may be a base station set in a location on land, water, etc.

In the embodiments of the present disclosure, the network device may provide services for a cell, and the terminal device communicates with the network device through transmission resources (e.g., frequency domain resources, or to say, spectrum resources) used by the cell. The cell may correspond to the network device (e.g., the base station), the cell may belong to a macro base station or may belong to a base station corresponding to a small cell. The small cells herein may include: metro cell, micro cell, pico cell, femto cell, etc. These small cells are characterized by a small coverage area and a low transmit power, and are suitable for providing a high-speed data transmission service.

It should be understood that the terms "system" and "network" are often used interchangeably herein. It should be understood that terms "and/or" are merely a description of an associated relationship of associated objects, indicating that three types of relationships may exist, e.g., A and/or B, which may be represented as: A alone, both A and B, and B alone. In addition, the character "/" herein generally indicates that the associated objects are in an "or" relationship.

The terms used in the embodiments of the present disclosure are intended only to explain specific embodiments of the present disclosure and are not intended to limit the present disclosure. The terms "first", "second", "third", and "fourth" in the specification and claims of the present disclosure and in the described drawings are intended to distinguish between different objects and are not intended to describe a particular order. In addition, the terms "including" and "having", and any variations thereof, are intended to cover non-exclusive inclusion.

It should be understood that the "instruct" mentioned in the embodiments of the present disclosure may be a direct instruction, an indirect instruction, or an indication of an associated relationship. For example, A instructing B may mean that A directly instructs B, e.g., B may obtain something through A; may mean that A indirectly instructs B, e.g., A instructs C, and B may obtain something through C; or may mean that there is an associative relationship between A and B.

In the description of the embodiments of the present disclosure, the term "corresponding" may indicate a direct or indirect corresponding relationship between the two, an associated relationship between the two, or a relationship between instructing and being instructed, configuring and being configured, etc.

In some embodiments of the present disclosure, "predefined" or "preset" may be realized by storing a corresponding code, form, or other means that can be configured to indicate relevant information in advance in a device (for example, including a terminal device and a network device), and the present disclosure does not limit the specific realization thereof. For example, predefinition may mean being defined in a protocol.

In some embodiments of the present disclosure, the "protocol" may refer to a standard protocol in the field of communication, for example, LTE protocol, NR protocol, and relevant protocols applied in future communication systems, and the present disclosure does not limit in this regard.

In order to facilitate the understanding of the technical solutions of the embodiments of the present disclosure, the technical solutions of the present disclosure are described in detail below by means of specific embodiments. The following related technologies can be arbitrarily combined with the technical solutions of the embodiments of the present disclosure as optional solutions, all of which fall within the scope of the embodiments of the present disclosure. The embodiments of the present disclosure include at least some of the following.

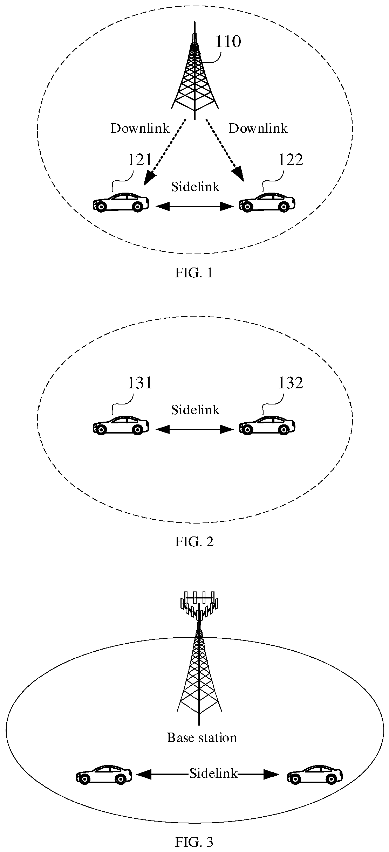

FIG. 1 is a schematic view of a communication system architecture applied by some embodiments of the present disclosure. Transmission resources for vehicle-mounted terminals (vehicle-mounted terminal 121 and vehicle-mounted terminal 122) are allocated by a base station 110, and the vehicle-mounted terminals transmit data on sidelink according to the resources allocated by the base station 110. Specifically, the base station 110 may allocate resources for a single transmission for the terminal, or may allocate resources for a semi-static transmission for the terminal.

FIG. 2 is a schematic diagram of another communication system to which embodiments of the present disclosure apply. Vehicle-mounted terminals (vehicle-mounted terminal 131 and vehicle-mounted terminal 132) autonomously select transmission resources on the resources on the sidelink for data transmission. In some embodiments, the vehicle-mounted terminals may randomly select transmission resources or select transmission resources by listening.

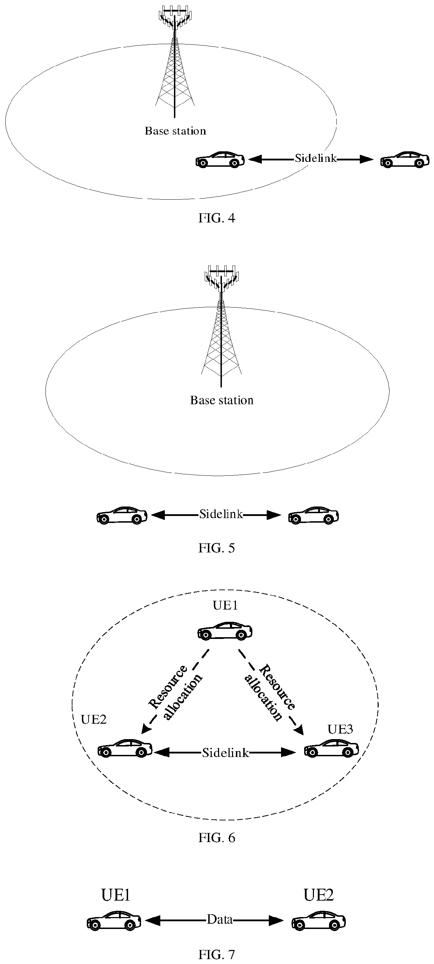

It is to be noted that in the sidelink communication, according to the network coverage in which the terminal conducting the communication is located, the sidelink communication can be divided into a sidelink communication within a network coverage, as shown in FIG. 3; a sidelink communication partially covered by network, as shown in FIG. 4; and a sidelink communication outside a network coverage, as shown in FIG. 5.

FIG. 3: In the sidelink communication within the network coverage, all terminals performing sidelink communication are within the coverage area of the base station, such that the above terminals can perform sidelink communication based on the same sidelink configuration by receiving a configuration signaling from the base station.

FIG. 4: In the sidelink communication partially within the network coverage, some of the terminals performing sidelink communication are located within the coverage area of the base station, and these terminals are able to receive the configuration signaling from the base station and perform sidelink communication based on the configuration of the base station. The terminals located outside the network coverage area cannot receive the configuration signaling from the base station, in which case the terminals outside the network coverage area will determine the sidelink configuration according to a pre-configuration information and information carried in a physical sidelink broadcast channel (PSBCH) transmitted by the terminals located within the network coverage area, to carry out sidelink communication.

FIG. 5: For the sidelink communication outside the network coverage, all terminals for sidelink communication are located outside the network coverage area, and all the terminals determine the sidelink configuration based on the pre-configuration information for sidelink communication.

FIG. 6: For a sidelink communication with a central control node, multiple terminals constitute a communication group having a central control node, which can also be called cluster header (CH). The central control node has one of the following functions: responsible for the establishment of the communication group; adding and discharging members of the group; resource coordination, allocating sidelink transmission resources for other terminals, and receiving sidelink feedback information from other terminals; resource coordination with other communication groups, etc.

It should be noted that a device-to-device communication is a sidelink (SL) transmission technology based on device to device (D2D), and unlike the traditional cellular system in which communication data are received or transmitted through the base station, Vehicle Networking system is adopted with terminal-to-terminal direct communication, so it has higher spectrum efficiency and lower transmission delay. In 3GPP, two transmission modes are defined, which are labeled as: sidelink resource allocation mode 1 and sidelink resource allocation mode 2.

In the first mode, the transmission resources of the terminal are allocated by the base station, and the terminal transmits data on the sidelink according to the resources allocated by the base station; the base station can allocate resources for the terminal for a single transmission, or it can allocate resources for the terminal for a semi-static transmission. As shown in FIG. 3, the terminal is located within the network coverage area, and the network allocates transmission resources for the terminal to be used for sidelink transmission.

In the second mode, the terminal selects a resource in the resource pool for data transmission. As shown in FIG. 5, the terminal is located outside the cell coverage area, and the terminal independently selects a transmission resource in a preconfigured resource pool for sidelink transmission; or, as shown in FIG. 3, the terminal independently selects a transmission resource in the resource pool configured by the network for sidelink transmission.

In New Radio - Vehicle to Everything (NR-V2X), autonomous driving is supported, and thus higher requirements are imposed on data interaction between vehicles, such as higher throughput, lower latency, higher reliability, larger coverage, and more flexible resource allocation.

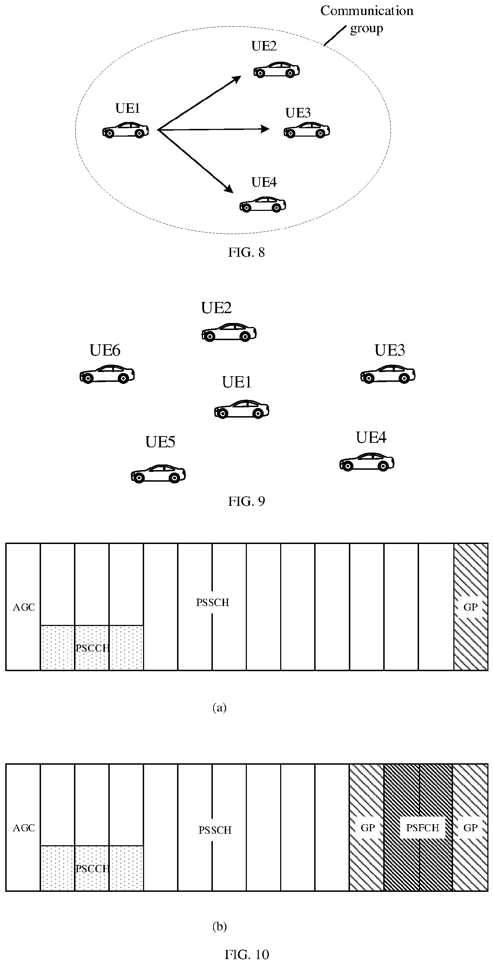

In LTE-V2X, broadcast transmission method is supported, and in NR-V2X, unicast and multicast transmission methods are introduced. For unicast transmission, there is only one terminal at the receiving end, as shown in FIG. 7, unicast transmission is performed between UE1 and UE2; for multicast transmission, the receiving end is all terminals within a communication group, or all terminals within a certain transmission distance, as shown in FIG. 8, UE1, UE2, UE3, and UE4 constitute a communication group, in which UE1 transmits data, and the other terminal devices are all receiving end terminals; for broadcast transmission, the receiving end is any terminal around the transmitting end terminal, as shown in FIG. 9, UE1 is the transmitting end terminal, and the other terminals around it, UE2-UE6, are all receiving end terminals.

In order to facilitate a better understanding of the embodiments of the present disclosure, the frame structure of the NR-V2X system related to the present disclosure is described.

The slot structure in NR-V2X is shown in FIG. 10, with (a) in FIG. 10 indicating a slot structure in which the slot does not include a physical sidelink feedback channel (PSFCH); and (b) in FIG. 10 indicating a slot structure in which the PSFCH is included.

A physical sidelink control channel (PSCCH) in NR-V2X occupies two or three orthogonal frequency-division multiplexing (OFDM) symbols in the time domain starting from a second sidelink symbol in the slot, and can occupy {10, 12 15, 20, 25} physical resource blocks (PRBs) in the frequency domain. In order to reduce the complexity of blind detection of PSCCH by the UE, only one number of PSCCH symbols and number of PRBs are allowed to be configured in a resource pool. In addition, because subchannels are the minimum granularity for physical sidelink shared channel (PSSCH) resource allocation in NR-V2X, the number of PRBs occupied by the PSCCH must be less than or equal to the number of PRBs contained in a subchannel within the resource pool, so as to avoid additional constraints on PSSCH resource selection or allocation. PSSCH also starts from the second sidelink symbol in the slot in the time domain, and a last time domain symbol in the slot is a guard period (GP) symbol, and the rest of the symbols map PSSCH. A first sidelink symbol in the slot is a repetition of the second sidelink symbol, and usually the receiving end terminal uses the first sidelink symbol as an auto gain control (AGC) symbol, and the data on this symbol is usually not used for data demodulation. The PSSCH occupies M subchannels in the frequency domain, and each subchannel includes N consecutive PRBs, as shown in (a) in FIG. 10.

When the PSFCH channel is included in the slot, the penultimate and penultimate third symbols in the slot are used as PSFCH channel transmissions, and a time domain symbol before the PSFCH channel is used as a GP symbol, as shown in (b) in FIG. 10.

To facilitate a better understanding of the embodiments of the present disclosure, the multibeam systems associated with the present disclosure are described.

The design goals of NR or 5G systems include large bandwidth communications in high frequency bands (e.g., bands above 6 GHz). As the operating frequency becomes higher, the path loss during transmission increases, thereby affecting the coverage capability of the high-frequency system. In order to effectively ensure the coverage of high-frequency band NR systems, an effective technical solution is based on massive MIMO antenna arrays to form fugitive beams with greater gain to overcome propagation loss and ensure system coverage.

Millimeter-wave antenna array allows more physical antenna arrays to be integrated in a two-dimensional antenna array with a limited size, due to shorter wavelength, less spacing and aperture of antenna array; in addition, due to the limited size of the millimeter-wave antenna array, it is impossible to use digital beamforming from the consideration of factors such as hardware complexity, cost overhead, and power consumption, and analog beamforming is usually applied, which enhances network coverage and also reduces the complexity of equipment implementation.

A cell (sector) is adopted with a wide beam to cover the entire cell. Therefore, at each moment, terminal devices within the cell coverage area have access to the transmission resources allocated by the system.

A multi-beam system of NR/5G covers the entire cell by means of different beams, i.e., each beam covers a smaller area, and the effect of multiple beams covering the entire cell is achieved by temporal sweeping.

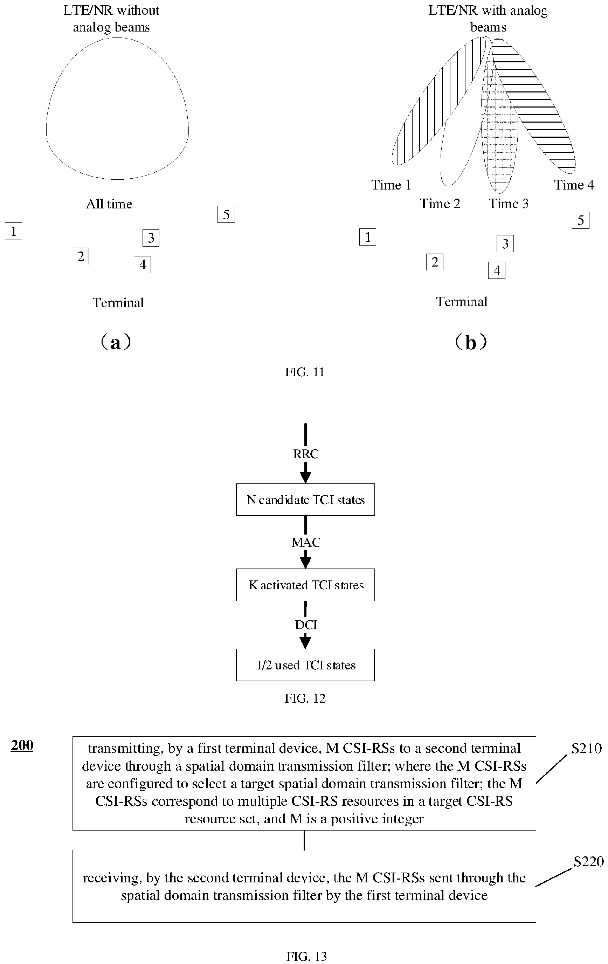

FIG. 11 is schematic views of using an analog beam and with not using an analog beam provided by the present disclosure. (a) in FIG. 11 is a conventional LTE and NR system without using beamforming, and (b) in FIG. 11 is a NR system using beamforming:

In (a) in FIG. 11, the LTE/NR network side applies a wider beam to cover the entire cell, and users 1-5 can receive the network signal at any moment.

In contrast, the network side in (b) in FIG. 11 applies narrower beams (e.g., beams 1-4) and uses the different beams to cover different areas in the cell at different moments, e.g., at moment 1, the NR network side covers the area where user 1 is located through beam 1; at moment 2, the NR network side covers the area where user 2 is located through beam 2; at moment 3, the NR network side covers the area where user 3 and user 4 are located through beam 3; at moment 4, the NR network side covers the area where user 5 is located through beam 4.

In (b) in FIG. 11, because the network applies narrower beams, the transmit energy can be more concentrated, and therefore can cover a longer distance; in addition, because of the narrower beams, each beam can only cover a part of the area in the cell, so the analog beamforming is "exchanging time with space".

The analog beamforming can be used not only for network-side device, but also for terminals. In addition, the analog beamforming can be used not only for transmitting signals (called transmission beams), but also for receiving signals (called receiving beams).

Different beams are recognized by the different carried signals.

Some different beams transmit different synchronization signal blocks (SS blocks), and the terminal device can distinguish different beams by different SS blocks.

Some different beams transmit different channel state information reference signals (CSI-RS), and the terminal device can identify different beams through CSI-RS signals/CSI-RS resources.

In a multi-beam system, a physical downlink control channel (PDCCH) and a physical downlink shared channel (PDSCH) can be transmitted by different downlink transmission beams.

For systems with carrier frequencies below 6G Hz, there are generally no analog beams on the terminal side. Therefore, omnidirectional antennas (or near omnidirectional antennas) are applied to receive signals transmitted by different downlink transmission beams at the base station.

For millimeter-wave systems, there may be analog beams on the terminal side, and the corresponding downlink receiving beams are required to receive signals transmitted by the corresponding downlink transmission beams. In this case, a beam indication information is required to assist the terminal device in determining information about the transmission beams on the network side or the receiving beams on the terminal side.

In the NR protocol, the beam indication information is not a direct indication of the beam itself, but an indication through a Quasi-co-located (QCL) assumption (e.g., QCL assumption with QCL type "QCL-TypeD") between signals. On the terminal side, the determination of the statistical characteristics of the reception of the corresponding channel/signal is also based on the QCL assumption.

In order to facilitate a better understanding of the embodiments of the present disclosure, the QCL indications/assumptions for downlink transmissions related to the present disclosure are described.

When a terminal performs signal reception, the reception algorithm may be improved by utilizing characteristics of a transmission environment corresponding to the data transmission in order to improve the reception performance. For example, the statistical characteristics of the channel may be applied to optimize the design and parameters of a channel estimator. In the NR system, the characteristics corresponding to data transmissions are represented through QCL states (QCL-Info).

When the downlink transmission is from a different transmission reception point (TRP)/antenna array block (panel)/beam, the characteristics of the transmission environment corresponding to the data transmission may change accordingly. Therefore, in the NR system, the network side indicates the corresponding QCL state information to the terminal through a transmission configuration indicator (TCI) state when transmitting the downlink control channel or the data channel.

A TCI state may contain the following configuration:

TCI state identification (ID) to identify a TCI state;

QCL information 1; and
QCL information 2 (optional).

A QCL information includes the following information:

QCL type configuration, which may be one of QCL typeA, QCL typeB, QCL typeC, or QCL typeD;
QCL reference signal configuration, including a cell identification (ID) of the cell in which the reference signal is located, a band width part (BWP) identification (ID), and an identification of the reference signal (which may be a CSI-RS resource identification or a synchronization signal block (SSB) index).

When the QCL information 1 and QCL information 2 are both configured, the QCL type of at least one QCL information must be one of typeA, typeB, and typeC, and the QCL type of another QCL information must be type D.
The different QCL type configurations are defined as follows:

'QCL-TypeA': {Doppler shift, Doppler spread, average delay, delay spread};
'QCL-TypeB': {Doppler shift, Doppler spread};
'QCL-TypeC': {Doppler shift, average delay};
'QCL-TypeD': {Spatial Rx parameter}.

In the NR system, the network side may indicate the corresponding TCI state for the downlink signal or the downlink channel.
When the QCL reference signal for the network side to configure a target downlink channel or a target downlink signal through the TCI state is a reference SSB or a reference CSI-RS resource, and the QCL type is configured to be typeA, typeB, or typeC, the terminal may assume that a large-scale parameter of the target downlink signal is the same as that of the reference SSB or the reference CSI-RS resource, and the large-scale parameter is determined through the QCL type configuration.
Similarly, when the QCL reference signal for the network side to configure a target downlink channel or a target downlink signal through the TCI state is a reference SSB or a reference CSI-RS resource, and the QCL type configuration is typeD, the terminal may adopt the same receiving beam (i.e., Spatial Rx parameter) as it receives the reference SSB or reference CSI-RS resource to receive the target downlink channel or target downlink signal. Typically, the target downlink channel (or downlink signal) is transmitted through the same TRP or the same panel or the same beam as the reference SSB or reference CSI-RS resource on the network side. When two downlink signals or downlink channels have different transmission TRPs or transmission panels or transmission beams, different TCI states are usually configured.
For the downlink control channel, a radio resource control (RRC) signaling, or RRC signaling + media access control (MAC) signaling may be applied to indicate a TCI state corresponding to a control resource set (CORESET).
For the downlink data channel, an available TCI state set is indicated by the RRC signaling, and some of the TCI states are activated by the MAC signaling, and finally one or two TCI states are indicated from activated TCI states through a TCI state indication field in a downlink control information (DCI), for the PDSCH scheduled by the DCI. The case of two TCI states is mainly for scenarios where multiple TRPs are similar. For example, as shown in FIG. 12, the network device indicates N candidate TCI states through the RRC signaling, activates K TCI states through the MAC signaling, and finally indicates one or two TCI states for use from the activated TCI states through the TCI state indication field in the DCI.
In order to facilitate a better understanding of the embodiments of the present disclosure, the technical problems of the present disclosure are described.
In order to enhance the transmission rate of a sidelink communication system, the use of a millimeter-wave frequency band in a sidelink transmission system is considered. In sidelink millimeter-wave transmission, the way of selecting an optimal spatial domain transmission filter between a transmitting end terminal and a receiving end terminal is a problem required to be solved.
Based on the above problem, the present disclosure proposes a scheme for determining an optimal spatial domain transmission filter for sidelink communication, which may determine an optimal spatial domain transmission filter between a transmitting end terminal and a receiving end terminal.
The technical solution of the present disclosure is described in detail below by means of specific embodiments.
FIG. 13 is a flowchart of wireless communication method 200 according to some embodiments of the present disclosure. As shown in FIG. 13, the wireless communication method 200 may include at least some of the following.
At block S210: transmitting, by a first terminal device, M CSI-RSs to a second terminal device through a spatial domain transmission filter; where the M CSI-RSs are configured to select a target spatial domain transmission filter; the M CSI-RSs correspond to multiple CSI-RS resources in a target CSI-RS resource set, and M is a positive integer;

At block S220: receiving, by the second terminal device, the M CSI-RSs transmitted through the spatial domain transmission filter by the first terminal device.

In some embodiments of the present disclosure, the second terminal device measures the received CSI-RS to obtain a measurement result, and the second terminal device may feed back the CSI-RS resources according to the measurement result, whereby the first terminal device may select the target spatial domain transmission filter.

In some embodiments of the present disclosure, to enhance the transmission rate of the sidelink communication system, a millimeter-wave frequency band is applied in the sidelink transmission system, and in the sidelink millimeter-wave transmission, the transmitting end (i.e., the first terminal device) usually uses beamforming for the sidelink transmission.

In some embodiments of the present disclosure, the second terminal device measures the received CSI-RS to obtain a measurement result, and the second terminal device may feed back the CSI-RS resources according to the measurement result, whereby the first terminal device may select the target spatial domain transmission filter.

In some embodiments of the present disclosure, the first terminal device is a transmitting end terminal device and the second terminal device is a receiving end terminal device.

In some embodiments, each of the M CSI-RSs is a sidelink CSI-RS.

In some embodiments, the M CSI-RSs may be replaced by other sidelink signals, i.e., in S210 above, the first terminal device may transmit M sidelink signals to the second terminal device through the spatial domain transmission filter, where the M sidelink signals are configured to select the target spatial domain transmission filter.

In some embodiments, each of the M sidelink signals may include, but not limited to, one of the following:

CSI-RS, demodulation reference signal (DMRS), PSCCH DMRS, PSSCH DMRS, positioning reference signal (PRS), phase tracking reference signal (PT-RS), or a sidelink synchronization signal (including a sidelink primary synchronization signal and/or a sidelink secondary synchronization signal).

In some embodiments, in the above S210, the "transmitting M CSI-RSs" may be expressed as "transmitting M CSI-RSs resources", and the present disclosure is not limited thereto. That is, in the embodiments of the present disclosure, the transmitting of CSI-RS by the first terminal device may be expressed as transmitting of CSI-RS resource by the first terminal device, i.e., the two are equivalent expressions. Similarly, a measurement result of the CSI-RS and a measurement result of the CSI-RS resource are equivalent.

In some embodiments, the spatial domain transmission filter may also be referred to as a transmission beam or a spatial relation or a spatial setting.

In some embodiments, the spatial domain transmission filter and a spatial domain reception filter are collectively referred to as spatial domain filters, where the spatial domain transmission filter may also be referred to as a transmitting end spatial domain filter, and the spatial domain reception filter may also be referred to as a receiving end spatial domain filter.

In some embodiments, each of the M CSI-RSs corresponds to a CSI-RS resource in the target CSI-RS resource set, and the M CSI-RSs corresponds to multiple CSI-RS resources in the target CSI-RS resource set may refer to: each two of CSI-RS resources corresponding to the M CSI-RSs are different, i.e., the M CSI-RSs and the multiple CSI-RS resources are in a one-to-one correspondence; or, there are at least two CSI-RSs corresponding to different CSI-RS resources among the M CSI-RSs. That is, the first terminal device transmits at least two CSI-RS resources using a spatial domain transmission filter.

In some embodiments, the transmitting, by a first terminal device, M CSI-RSs to a second terminal device through a spatial domain transmission filter may mean: that the first terminal device transmits the M CSI-RSs using different spatial domain transmission filters, e.g., the M CSI-RSs each correspond to a different transmission beam; or, that the first terminal device does not apply a same spatial domain transmission filter to transmit the M CSI-RSs, e.g., the M CSI-RSs are transmitted through at least two different transmission beams.

As an example, the step S210 may specifically include:
transmitting, by the first terminal device, the M CSI-RSs to the second terminal device through M spatial domain transmission filters; where the M spatial domain transmission filters and the M CSI-RSs are in a one to one correspondence.

As an example, the step S210 may specifically include:
transmitting, by the first terminal device, the M CSI-RSs to the second terminal device through K spatial domain transmission filters; where K is less than M and K is greater than 1; i.e., there are at least two CSI-RSs among the M CSI-RSs that are transmitted through different spatial domain transmission filters.

In the embodiments of the present disclosure, the terminal device may perform sidelink data transmission through beams, in which case the transmitting end terminal may determine a transmission beam applicable to the receiving end terminal to enhance sidelink transmission performance. For example, when the first terminal device serves as the transmitting end terminal, it may transmit sidelink reference signals through different transmission beams; and furthermore, the receiving end terminal may measure the sidelink reference signals transmitted by the transmitting end terminal, select a transmission beam corresponding to an optimal measurement result, and further feed back the optimal transmission beam to the transmitting end terminal, such that the transmitting end terminal conducts subsequent sidelink transmissions according to the optimal transmission beam fed back by the receiving end terminal, thereby improving the sidelink transmission performance. In some embodiments, there is a correspondence between the transmission beam and the reference signal resource, the receiving end terminal selects the transmission beam corresponding to the optimal measurement result and feeds back a reference signal resource information corresponding to the transmission beam to the transmitting end terminal, and the transmitting end terminal determines the optimal transmission beam according to the reference signal resource information and the correspondence.

In some embodiments, a corresponding repetition field in a configuration information of the target CSI-RS resource set takes a first value, where the first value is configured to indicate that the first terminal device does not transmit the CSI-RS resources in the target CSI-RS resource set through a same spatial domain transmission filter. In other words, the first value is configured to indicate that the first terminal device transmits the CSI-RS resources in the target CSI-RS resource set through different spatial domain transmission filters.

In some embodiments, the first value may be "off', indicating that the first terminal device transmits the M CSI-RSs for selecting the target spatial domain transmission filter.

In some embodiments, the first terminal device transmits a first sidelink configuration information to the second terminal device.

The first sidelink configuration information includes at least one of the following:

an index of the target CSI-RS resource set, indexes of CSI-RS resources included in the target CSI-RS resource set, a number of CSI-RS resources included in the target CSI-RS resource set, a value of the M, a correspondence between the CSI-RS resource set and a CSI report quantity (reportQuantity), a number of the CSI-RS resources reported or fed back by the second terminal device to the first terminal device, a first delay boundary, a value of a repetition field corresponding to the target CSI-RS resource set.

The repetition field corresponding to the target CSI-RS resource set takes a first value for indicating that the first terminal device does not transmit the CSI-RS resources through a same spatial domain transmission filter. The repetition field corresponding to the target CSI-RS resource set takes a second value for indicating that the first terminal device transmits the CSI-RS resources through a same spatial domain transmission filter.

Specifically, the second terminal device may be informed of a configuration applied by the first terminal device to transmit the CSI-RS resources according to the first sidelink configuration information, and/or the second terminal device may be informed of a configuration applied by the second terminal device to receive the CSI-RS resources according to the first sidelink configuration information, and/or the second terminal device may be informed of a configuration applied by the second terminal device to perform CSI report or feedback.

Accordingly, the first terminal device transmits the first sidelink configuration information to the second terminal device, such that the second terminal device can be informed of the CSI-RS transmission configuration and/or the reception configuration, detect and measure the CSI-RS resources based on the transmission configuration and/or the reception configuration, and select the CSI-RS resources for report or feedback according to the measurement result in conjunction with the report or feedback configuration, thereby realizing a target transmission beam selection process.

In some embodiments, within the first delay boundary, the first terminal device does not expect the second terminal device to perform a report or feedback regarding the CSI-RS; and/or, after exceeding the first delay boundary, the second terminal device is allowed to perform a report or feedback regarding the CSI-RS; and/or, after exceeding the first delay boundary, the second terminal device does not expect the first terminal device to transmit the CSI-RS for determining the spatial domain transmission filter; and/or, after exceeding the first delay boundary, the second terminal device stops receiving the CSI-RS transmitted by the first terminal device for determining the spatial domain transmission filter.

In some embodiments, the first sidelink configuration information may be transmitted by the second terminal device to the first terminal device.

In some embodiments, the first terminal device determines the target CSI-RS resource set according to a first CSI-RS resource set included in a resource pool configuration information or a sidelink bandwidth part (BWP) configuration information; and the first terminal device determines CSI-RS resources included in the target CSI-RS resource set according to CSI-RS resources included in the first CSI-RS resource set.

In some embodiments, the resource pool configuration information or sidelink BWP configuration information includes a CSI-RS resource set (CSI-RS-ResourceSet) configuration information and/or a CSI report configuration information.

In some embodiments, the CSI-RS resource set configuration information includes one or more of the following parameters:

CSI-RS resource set identification (CSI-RS ResourceSetId);
CSI-RS resource configuration information (CSI-RS-Resource);
Configuration information for parameter repetition, e.g., taking a value of off or on;
a number of time domain symbols occupied by a CSI-RS resource;

Indication information for determining a time domain symbol in which a first CSI-RS resource is located, e.g., by means of a time domain symbol index in the slot;

Indication information for determining a resource element (RE) or subcarrier in which the CSI-RS resource is located within a physical resource block (PRB), e.g. indicating the position of the RE where the first CSI-RS is located within the PRB in the form of a bitmap through a parameter Sidelink CSI-RS Frequency Allocation (sl-CSI-RS -Freq Allocation).

When the transmitting end terminal transmits an instruction information to the receiving end terminal indicating that CSI-RS resources in a CSI-RS resource set with a repetition having a value of "off" is to be transmitted, the receiving end terminal may assume that the transmitting end terminal does not transmit the CSI-RS resources through a same transmission beam, and therefore, the receiving end terminal may perform measurements according to the CSI-RS and perform a CSI report or feedback to the transmitting end terminal, thereby enabling the first terminal device to determine a target transmission beam according to the CSI report or feedback.

When the transmitting end terminal transmits an indication information to the receiving end terminal indicating that CSI-RS resources in a CSI-RS resource set with a repetition having a value of "on" is to be transmitted, the receiving end terminal may assume that the transmitting end terminal transmits the CSI-RS resources through a same transmission beam, and therefore, the receiving end terminal may perform reception through different receiving beams and perform a measurement on the CSI-RS, and determining a receiving beam according to the measurement result.

In some embodiments, the measurement result of the CSI-RS resources may include, but not limited to, at least one of the following:

reference signal receiving power (RSRP), reference signal receiving quality (RSRQ), signal to interference plus noise ratio (SINR).

In some embodiments, the CSI report quantity includes at least one of the following:

CSI-RS resource indicator (CRI), CRI and reference signal receiving power (RSRP) ('cri-RSRP'), CRI and signal to interference plus noise ratio (SINR) ('cri-SINR'), slot resource indication (SRI), SRI and RSRP, SRI and SINR, and None or Null ('none').

In some embodiments, the CRI may be a resource index of a CSI-RS resource.

In some embodiments, the slot resource indication may be configured to indicate a slot information corresponding to a CSI-RS resource, selected by the receiving end terminal of the CSI-RS resource. For example, the first terminal device transmits a CSI-RS resource in a slot, and when the second terminal device receives the CSI-RS resource, the second terminal device may be informed of a slot information in which the first terminal device transmits the CSI-RS resource; when the second terminal device chooses to report or feed back the CSI-RS resource, the second terminal device may feed back the slot information corresponding to the CSI-RS resource, such that the first terminal device may determine the CSI-RS resource corresponding to the slot information based on the slot information.

In some embodiments, the resource pool configuration information or sidelink BWP configuration information further includes one or more of the following parameters:

a number of antenna ports, e.g., indicating the number of CSI-RS antenna ports as {1,2,4,8}, etc.;
CSI-RS density.

In some embodiments, this CSI-RS density is configured to indicate a number of REs occupied by CSI-RS per antenna port within each PRB. For example, a density of 2 means that the CSI-RS occupies 2 REs per antenna port within each PRB.

In some embodiments, when the CSI-RS density is less than 1, the resource pool configuration information or sidelink BWP configuration information may further include a PRB information for indicating mapped CSI-RS resources. For example, when the density is 0.5, i.e., each antenna port occupies 1 RE per 2 PRBs, the resource pool configuration information or sidelink BWP configuration information may further include a PRB information for mapping one CSI-RS resource per 2 PRBs, e.g., mapping the CSI-RS resource on an odd (or even) number of PRBs.

In some embodiments of the present disclosure, a use of the CSI-RS resource set may be indicated by the value of the repetition field of the CSI-RS resource set, such as whether it is for determining a target transmission beam or for determining a target receiving beam.

For example, when the CSI-RS resource set is for determining a target transmission beam, the transmitting end terminal may use a CSI-RS resource set with a repetition having a value of "off"; when the CSI-RS resource set is for determining a target receiving beam, the transmitting end terminal may use a CSI-RS resource set with a repetition having a value of "on".

In some embodiments, the resource pool configuration information or the sidelink BWP configuration information includes a configuration information for a first CSI-RS resource set and a configuration information for a second CSI-RS resource set. The first CSI-RS resource set has a repetition with a value of "off", and the second CSI-RS resource set has a repetition with a value of "on".

When the target transmission beam is required to be determined, the first terminal device may use the first CSI-RS resource set. For example, the first terminal device may transmit M1 CSI-RS resources in the first CSI-RS resource set respectively through different transmission beams, the second terminal device may measure the received CSI-RS resources respectively and perform a CSI report or feedback according to the measurement result, and the first terminal device carries out a selection for the target transmission beam according to the CSI report or feedback of the second terminal device.

When the receiving beam is required to be determined, the first terminal device may use the second CSI-RS resource set. For example, the first terminal device transmits M2 CSI-RS resources in the second CSI-RS resource set respectively through a same transmission beam, and the second terminal device receives CSI-RS resources respectively through different receiving beams, measures the CSI-RS resources, and carries out a selection for the target receiving beam according to the measurement result.

In other embodiments of the present disclosure, a use of the CSI-RS resource set may be indicated by a CSI report quantity configuration corresponding to the CSI-RS resource set, such as whether it is for determining a target transmission beam or for determining a target receiving beam. For example, when the CSI-RS resource set is for determining a target transmission beam, the transmitting end terminal uses a CSI-RS resource set with a CSI report quantity that is not 'none'; and when the CSI-RS resource set is for determining a target receiving beam, the transmitting end terminal uses a CSI-RS resource set with a CSI report quantity that is 'none'.

For example, the resource pool configuration information or the sidelink BWP configuration information is configured with two CSI-RS resource sets and with a CSI report quantity corresponding to each CSI-RS resource set, where the CSI report quantity corresponding to a first CSI-RS resource set is 'cri-RSRP' and the CSI report quantity corresponding to a second CSI-RS resource set is 'none'.

When the first terminal device indicates to the second terminal device that the CSI report quantity is 'cri-RSRP', it means that the first terminal device will transmit CSI-RS resources in the first CSI-RS resource set, in which case the second terminal device may assume that the first terminal device transmits the CSI-RS resources through different transmission beams, and therefore, the second terminal device performs a measurement on the CSI-RS resources and performs a CSI report or feedback, thereby enabling the first terminal device to determine the target transmission beam according to the CSI report or feedback.

When the first terminal device indicates to the second terminal device that the CSI report quantity is 'none', it means that the first terminal device will transmit CSI-RS resources in the second CSI-RS resource set, in which case the second terminal device may assume that the first terminal device transmits the CSI-RS resources through a same transmission beam, and therefore, the second terminal device may receive the CSI-RS resources respectively through different receiving beams, measure the CSI-RS resources, and select the target receiving beam according to the measurement result.

In some embodiments, both the first terminal device and the second terminal device may be informed of the resource pool configuration information or the sidelink BWP configuration information. That is, the first terminal device and the second terminal device have the same understanding of the CSI-RS resource configuration information.

In some embodiments, the first sidelink configuration information is carried through one of the following: SCI, MAC CE, PC5-RRC signaling.

In some embodiments, when the first sidelink configuration information is carried through SCI or MAC CE, the first terminal device indicates activation of sidelink feedback.

In some embodiments, the first terminal device indicates an index of the target CSI-RS resource set to the second terminal device, and the second terminal device may be informed of CSI-RS resources in which CSI-RS resource set the first terminal device are about to transmit. Further, it may be determined whether the CSI-RS resource in the target CSI-RS resource set is configured to determine a target transmission beam or to determine a target receiving beam in conjunction with a value of a corresponding repetition field of the target CSI-RS resource set or a CSI report quantity. For example, when the target CSI-RS resource set is configured to determine a target transmission beam, the second terminal device may receive the CSI-RS resources transmitted by the first terminal device through a same receiving beam. For another example, when the target CSI-RS resource set is configured to determine a target receiving beam, the second terminal device may receive the CSI-RS resources transmitted by the first terminal device through different receiving beams.

In some embodiments, the index of the CSI-RS resources included in the target CSI-RS resource set may be an index of all the CSI-RS resources included in the target CSI-RS set, or an index of the CSI-RS resources actually transmitted by the first terminal device, such as an index of multiple CSI-RS resources corresponding to the M CSI-RSs.

By the first terminal device indicating to the second terminal device the index of the CSI-RS resources included in the target CSI-RS resource set, the second terminal device may be informed of the CSI-RS resources that will be (and may be) transmitted by the first terminal device, and further, the second terminal device may measure and report the CSI-RS resources.

In some embodiments, the value of the repetition field corresponding to the target CSI-RS resource set may be configured for the second terminal device to determine whether the CSI-RS resources to be transmitted by the first terminal device are configured to determine a target transmission beam or a target receiving beam. Further, the detection and measurement of the CSI-RS resources may be performed in a corresponding manner. For example, when the value of the repetition field corresponding to the target CSI-RS resource set is a first value (e.g., the first value is "off"), the second terminal device may receive the CSI-RS resource transmitted by the first terminal device through a same receiving beam. As another example, when the value of the repetition field corresponding to the target CSI-RS resource set is a second value (e.g., the second value is "on"), the second terminal device may receive the CSI-RS resources transmitted by the first terminal device through different receiving beams.

In some embodiments, the first sidelink configuration information may further include at least one CSI-RS resource set of multiple CSI-RS resource sets in the resource pool configuration information or sidelink BWP configuration information.

For example, the resource pool configuration information or the sidelink BWP configuration information is configured with A CSI-RS resource sets, where each CSI-RS resource set includes at least one CSI-RS resource, A being a positive integer. The first sidelink configuration information may include at least one CSI-RS resource set in the A CSI-RS resource sets.

Further, the first sidelink configuration information may further include at least one CSI-RS resource in each of the at least one CSI-RS resource set.

It should be understood that the number of CSI-RS resources in each CSI-RS resource set included in the first sidelink configuration information may be the same, or may be different. For example, P resources in the first CSI-RS resource set and Q resources in the second CSI-RS resource set are included in the first sidelink configuration, where P and Q may be the same or different.

By way of example, the resource pool configuration information is configured with A CSI-RS resource sets, and the transmitting end terminal transmits the first sidelink configuration information to the receiving end terminal, where the first sidelink configuration information includes an index of each CSI-RS resource set, and the receiving end terminal may determine a corresponding CSI-RS resource set through the index. In the resource pool configuration information, a CSI-RS resource set includes B CSI-RS resources, and the transmitting end terminal may select K CSI-RS resources from the CSI-RS resource set, and transmit information of the K CSI-RS resources to the receiving end terminal, where CSI-RS resources subsequently transmitted by the transmitting end terminal belong to the K CSI-RS resources, where $1 <= K <= B$, and B is a positive integer. For example, the CSI-RS resource set includes 16 CSI-RS resources, and when a transmission beam of the transmitting end terminal is to be determined, the maximum number of transmission beams supported by the transmitting end terminal is 4. In this case, the transmitting end terminal may select 4 CSI-RS resources from the 16 CSI-RS resources included in the CSI-RS resource set and transmit information of the 4 CSI-RS resources to the receiving end terminal, thereby enabling the transmitting end terminal and the receiving end terminal to understand the transmitting configuration of the CSI-RS resources for the same.

In some embodiments, the number of CSI-RS resources included in the target CSI-RS resource set may refer to the number of all CSI-RS resources included in the target CSI-RS resource set, or may refer to the number of CSI-RS resources actually transmitted by the first terminal device, e.g., the number of multiple CSI-RS resources corresponding to the M CSI-RSs.

The first terminal device indicates to the second terminal device the number of CSI-RS resources included in the target CSI-RS resource set or the value of M, such that the second terminal device may determine a bit length corresponding to each CSI-RS resource index when performing CSI report or feedback, according to the number of CSI-RS resources included in the target CSI-RS resource set or the value of M.

Taking the example of the first terminal device indicating to the second terminal device the value of the parameter M, the bit length for feeding back a CSI-RS resource index may be $ceil(log_2 M)$, ceil(.) indicating upward rounding.

In some embodiments, the first terminal device may further configure to the second terminal device a correspondence between the CSI-RS resource set and the CSI report quantity. For example, an identification information of the CSI-RS resource set (CSI-RS-ResourceSetId) or an identification information of the CSI-RS resource configuration (CSI-ResourceConfigId) is included in a CSI report configuration information (CSI-ReportConfig), for correlating the CSI report quantity and the CSI-RS resource set. As a further example, a CSI report configuration identification information (CSI-ReportConfigId) is included in the CSI-RS-ResourceSet or the CSI-ResourceConfig, and embodiments of the present disclosure do not limit the manner in which the two may be associated.

In some embodiments, the first delay boundary may be referenced by a first slot. For example, the first slot is a slot in which the first sidelink configuration information is located. For example, the first delay boundary may be a slot offset that is an offset relative to the slot in which the first sidelink configuration information is located.

In some embodiments, within the first delay boundary, the first terminal device does not expect the second terminal device to perform a report or feedback regarding the CSI-RS resources. In other words, the first terminal device does not expect the second terminal device to perform a CSI report or feedback within the first delay boundary.

In some embodiments, after exceeding the first delay boundary, the second terminal device is allowed to perform a report or feedback regarding the CSI-RS resource. In other words, the second terminal device is allowed to perform a CSI report or feedback after the first delay boundary is exceeded.

In some embodiments, after exceeding the first delay boundary, the second terminal device does not expect the first terminal device to transmit the CSI-RS resources for determining the spatial domain transmission filter.

In some embodiments, after exceeding the first delay boundary, the second terminal device stops receiving the CSI-RS resources transmitted by the first terminal device for determining the spatial domain transmission filter. In other words, after the first delay boundary is exceeded, the first terminal device stops transmitting the CSI-RS resources for determining the spatial domain transmission filter.

In some scenarios, the second terminal device may not be informed of the number of transmission beams used by the first terminal device, or the number of CSI-RS resources to be transmitted by the first terminal device (e.g., the transmitting end terminal does not transmit the value of M to the receiving end terminal), in which case the second terminal device may determine the moment at which to perform a CSI-RS measurement and feedback according to the first delay boundary. For example, exceeding the first delay boundary means that the first terminal device will not transmit the CSI-RS anymore, in which case the second terminal device may perform the measurement and feedback based on the detected CSI-RSs.

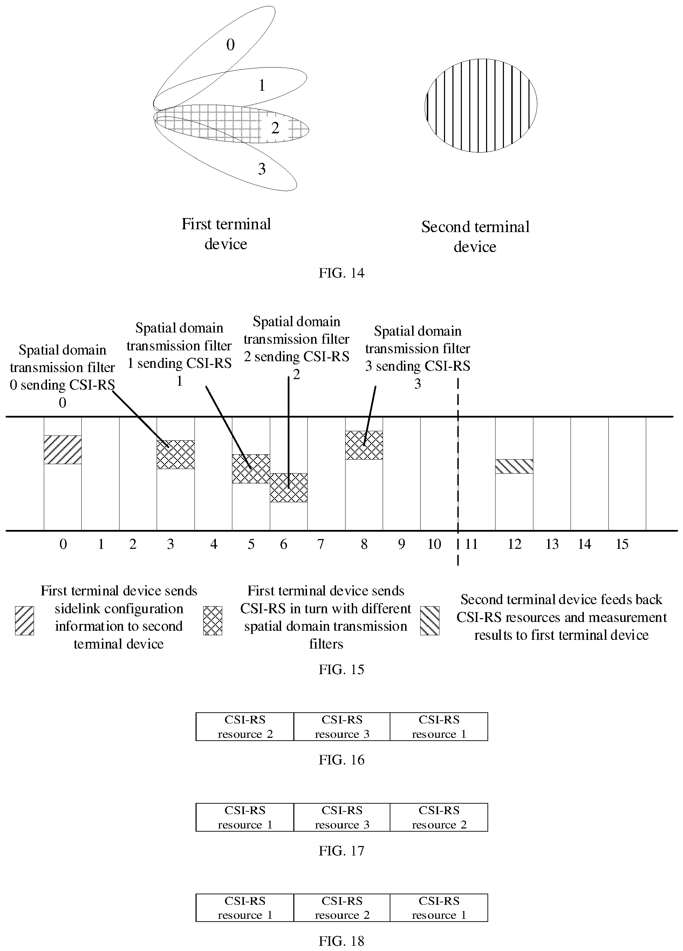

As shown in FIGS. 14 and 15, the first terminal device transmits the CSI-RS resources respectively through four spatial domain transmission filters (spatial domain transmission filter 0 to spatial domain transmission filter 3), the first terminal device transmits the first sidelink configuration information to the second terminal device at slot 0, the first sidelink configuration information indicates a first delay boundary of 10 slots, the first terminal device takes turns to transmit the CSI-RS resources before slot 10, and the second terminal device does not report or feed back the CSI-RS resources until after slot 10.

It should be understood that the content indicated by the first sidelink configuration information may be transmitted through a same message or signaling, or, may be transmitted through different information or signalings, which is not limited by the present disclosure.

It should be noted that when the content indicated by the first sidelink configuration information is transmitted through different signalings, the present disclosure does not limit the order in which the signaling is transmitted.

It should be noted that when the content indicated by the first sidelink configuration information is transmitted through different signalings, the present disclosure does not limit the type of the signalings. For example, the first sidelink configuration information is transmitted through two signalings, where a first signaling is a PC5-RRC signaling and a second signaling is SCI; or, each signaling is PC5-RRC.

In some embodiments, the first terminal device transmits a first indication information to the second terminal device;

where the first indication information is configured to indicate at least one of the following:
the first terminal device will transmit the CSI-RSs for selecting a target spatial domain transmission filter; the first terminal device will transmit the CSI-RSs through different spatial domain transmission filters; CSI report quantity; an index of a CSI-RS resource firstly (a first CSI-RS resource) transmitted by the first terminal device.

It should be understood that the first indication information may be configured through either sidelink information or sidelink signaling. The first indication information is carried through one of the following: a PC5-RRC signaling, SCI, MAC CE, sidelink feedback information, such as physical sidelink feedback channel (PSFCH).

In some implementations, the first terminal device indicates activation of sidelink feedback when the first indication information is carried over SCI or MAC CE.

In some implementations, before transmitting the CSI-RS, the first terminal device may inform the second terminal device that the first terminal device will transmit CSI-RSs, or will transmit CSI-RSs for selecting a target spatial domain transmission filter, or will transmit CSI-RSs through different spatial domain transmission filters, such that the second terminal device may perform a CSI-RS resource measurement and report according to the CSI-RSs to realize a target transmission beam selection process.

It should be understood that the CSI-RS resource configuration may be configured in the first sidelink configuration information or in the first indication information. For example, the first terminal device transmits the first indication information to the second terminal device when the first terminal device is required to transmit the CSI-RSs, and the first indication information is configured to indicate the resource configuration of the CSI-RS.

That is, some or all of the first sidelink configuration information may be indicated by the first indication information. In other words, the content indicated by the first sidelink configuration information and the first indication information may be carried over the same signaling, or may be carried over different signalings.

In some embodiments, the first terminal device transmits CSI-RS resources in a certain order starting from the CSI-RS resources corresponding to a resource index of the first CSI-RS resource, and correspondingly, the second terminal device receives the CSI-RS resources in a certain order starting from the CSI-RS resources corresponding to the resource index of the first CSI-RS resource received by the second terminal device. The order may be an order of the resource indexes from small to large, or an order of the resource indexes from large to small.

For example, the target CSI-RS resource set includes 8 CSI-RS resources, and when the index of the first CSI-RS resource transmitted is resource index 2, it means that the first terminal device will start the sequential transmitting of CSI-RS resources from the CSI-RS resource corresponding to CSI-RS resource index 2, i.e., it will transmit firstly the CSI-RS resource corresponding to CSI-RS resource index 2, and then transmit the CSI-RS resources corresponding to CSI-RS resource index 3, and so on; when the CSI-RS resource corresponding to CSI-RS resource index 7 is transmitted, then the first terminal device transmits the CSI-RS resource corresponding to CSI-RS resource index 0, and the CSI-RS resource corresponding to CSI-RS resource index 1.

When the second terminal device is informed of the order of the CSI-RS resources to be transmitted by the first terminal device and is informed of the transmission resource on which the first terminal device will transmit the CSI-RS, even if the second terminal device does not correctly receive the SCI transmitted on the transmission resource, the second terminal device still can perform CSI-RS detection and measurement on the transmission resource, ensuring that the second terminal device obtains measurement results of all the CSI-RSs transmitted by the first terminal device, which may avoid not being informed of the reception configuration of the CSI-RS and thus not being able to carry out the corresponding measurement caused by the second terminal device not correctly detecting the SCI.

In some embodiments, when the first terminal device does not transmit the index information of the first CSI-RS resource to be transmitted to the second terminal device, by default the first terminal device starts transmitting from a first CSI-RS resource index (e.g., a CSI-RS resource corresponding to resource index 0 or the minimum resource index) in the CSI-RS resource set.

It should be understood that the specific implementation of the CSI report quantity in the first indication information is referred to the relevant description of the preceding embodiments and will not be repeated herein for the sake of brevity.

It should be understood that each information indicated by the first indication information may be transmitted through a same message or signaling, or may be transmitted through different messages or signalings.

In some embodiments, when the first terminal device transmits a CSI-RS to the second terminal device through a spatial domain transmission filter, the first terminal device carries a CSI-RS resource indication information corresponding to the CSI-RS in a SCI associated with the CSI-RS.

In some embodiments, the CSI-RS resource indication information corresponding to the CSI-RS includes an index of a CSI-RS resource set corresponding to the CSI-RS and/or an index of the CSI-RS resource.

In some embodiments, the first terminal device transmits a second indication information to the second terminal device;

where the second indication information is configured to indicate that the CSI-RS transmitted by the first terminal device is configured to select a spatial domain transmission filter for sidelink data transmission by the first terminal device; or, the second indication information is configured to indicate that the CSI-RS transmitted by the first terminal device is configured to select a spatial domain reception filter for sidelink data reception by the second terminal device; or, the second indication information is configured to indicate that the CSI-RS transmitted by the first terminal device is configured to measure a channel state information.

In some embodiments, the channel state information may include, but is not limited to, at least one of the following:

channel quantity indicator (CQI), rank indication (RI), precoding matrix indicator (PMI).

In some embodiments, the second indication information is carried through one of the following:

PC5-RRC signaling, SCI, MAC CE, sidelink feedback information.

In some embodiments, when the second indication information is carried through SCI or MAC CE, the first terminal device indicates activation of sidelink feedback.

In some implementations, the first sidelink configuration information, the first indication information, and the second indication information may be carried in a same signaling, or different signalings.

In some embodiments, the first terminal device receives a first information transmitted by the second terminal device.

The first information includes a target CSI report quantity, the target CSI report quantity including at least one of: CRI, CRI and RSRP, CRI and SINR, slot resource indication (SRI), SRI and RSRP, SRI and SINR.

The SRI information is configured to determine a slot corresponding to a CSI-RS transmitted by the first terminal device, or the SRI information is configured to determine an index corresponding to a CSI-RS resource transmitted by the first terminal device.

For example, the first terminal device transmits a CSI-RS in a slot, and the second terminal device may be informed of the slot in which the CSI-RS is transmitted, in which case the second terminal device may feed back information about the slot corresponding to the selected CSI-RS, and the first terminal device may determine information about the CSI-RS resource or the resource index corresponding to the slot based on the slot information.

In some embodiments, the activation of sidelink feedback is indicated in a SCI to which the first information is associated. That is, the activation of sidelink feedback is indicated in the SCI transmitted concurrently with the first information. Specifically, activating the sidelink feedback ensures that the first terminal is able to correctly receive the first information.

In some embodiments, the first terminal device receives the first information transmitted by the second terminal device at a first time unit, where the first time unit is located after a second time unit determined based on the first delay boundary.

In some embodiments, the CRI may be an index of a CSI-RS resource, e.g., in a case where the CSI report quantity indicated by the first sidelink configuration information or a third indication information is CRI, the second terminal device may only feed back the index of the CSI-RS resource. As another example, in a case where the CSI report quantity indicated by the first sidelink configuration information or the third indication information is CRI-RSRP, the second terminal device may feed back the index and the RSRP of the CSI-RS resource. As a further example, in a case where the CSI report quantity indicated by the first sidelink configuration information or third indication information includes CRI-SINR, the second terminal device may feed back the index and the SINR of the CSI-RS resource.

In some embodiments, the CSI-RS resource may be indicated by a slot resource, as indicated with reference to the relevant description of the preceding embodiments.

In some embodiments, the target CSI report quantity may be determined by the second terminal device according to a measurement result obtained by performing a measurement on the received CSI-RS.

In some embodiments, the measurement result (including RSRP and/or SINR) in the present disclosure is obtained based on performing a measurement on the CSI-RS. In other embodiments, the measurement result is obtained based on performing a measurement on PSCCH DRMS, PSSCH DMRS, or sidelink PT-RS. In some embodiments, the CSI-RS transmitted by the transmitting end is carried in the PSSCH, i.e., the CSI-RS is mapped in resources of the PSSCH, and the PSSCH is scheduled through SCI, instructing the CSI-RS transmission. In this case, in each CSI-RS transmission, there is a PSCCH and a PSSCH associated with it. Therefore, the receiving end may perform a measurement based on PSCCH DMRS or PSSCH DMRS. That is, the CSI-RS resource may be determined based on the measurement on the PSCCH DMRS or PSSCH DMRS associated with the CSI-RS.

In some embodiments, the transmitting end indicates transmitting CSI-RS through an indication information, and the receiving end determines a CSI-RS resource based on a measurement result by measuring the PSCCH DMRS or PSSCH DMRS associated with the CSI-RS as PSCCH-RSRP or PSSCH-RSRP and transmits the CSI-RS resource index, or the CSI-RS resource index and its associated measurement result (i.e., PSCCH-RSRP or PSSCH-RSRP) to the transmitting end to assist the transmitting end in selecting a spatial domain transmission filter.

It should be understood that the following embodiments are illustrated as an example where the measurement result is obtained based on a CSI-RS, and the embodiments in the present disclosure are equally applicable where the measurement result is obtained based on a PSCCH DMRS or a PSSCH DMRS.

In some embodiments, the first information includes indexes of N CSI-RS resources, or, the first information is configured to determine indexes of N CSI-RS resources; the N CSI-RS resources are determined by the second terminal device according to a measurement result obtained by performing a measurement on received CSI-RSs, and N is a number of CSI-RS resources to be fed back or reported by the second terminal device; where N is a positive integer, and $N \leq M$.

In some embodiments, the second terminal device may transmit an indication information to the first terminal device for indicating the number of CSI-RS resource information (or CSI-RS resource indexes) fed back by the second terminal device.

In some embodiments, the indexes of the N CSI-RS resources are arranged in an order of the measurement results corresponding to the N CSI-RS resources from high to low, or the indexes of the N CSI-RS resources are arranged in an order of the measurement results corresponding to the N CSI-RS resources from low to high.

As an example, N=1, i.e., the second terminal device is only required to feed back a CSI-RS resource index, in which case only a CSI-RS with the optimal measurement result is required to be fed back, and the first terminal device may determine a transmission beam corresponding to the CSI-RS as the target transmission beam according to the CSI-RS resource index. In some embodiments, when N=1, the second terminal device is not required to feed back the measurement result. In some embodiments, when N is greater than 1, the second terminal device may feed back only the CSI-RS resource information, in which case the CSI-RS resource information fed back is arranged in an order of the measurement results from high to low. For example, when N=3, i.e., three CSI-RS resource information are required to be fed back, namely, CSI-RS resource 1, CSI-RS resource 2, and CSI-RS resource 3, of which corresponding RSRP measurement results are -30 dBm, -10 dBm, and -20 dBm, respectively, the CSI-RS resource information fed back is as shown in FIG. 16. That is, the CSI-RS resource with the optimal measurement result is at the top, followed by the CSI-RS resource with the suboptimal measurement result, and so on. Alternatively, it may be that the CSI-RS resource with the optimal measurement result is at the very back, followed by the CSI-RS resource with the suboptimal measurement result, and so on, as shown in FIG. 17.

In some embodiments, the first information further includes a first measurement information, which is configured to indicate a measurement result corresponding to the N CSI-RS resources.

That is, the second terminal device feeds back the indexes of the N CSI-RS resources and their corresponding measurement results.

In some embodiments, when the first terminal device is required to switch the spatial domain transmission filter, the first terminal device may quickly select and switch from among N spatial domain transmission filters corresponding to the N CSI-RS resources fed back by the second terminal device without the need for the first terminal device to perform the process of selecting an optimal spatial domain transmission filter again.

For example, when the sidelink operates in the millimeter wave band, the link between the transmitting end terminal and the receiving end terminal may easily fail due to the obstruction of other objects, and the transmitting end terminal has to re-determine the optimal spatial domain transmission filter. When only one CSI-RS resource is fed back from the receiving end terminal, the transmitting end terminal is required to perform the process of selecting the optimal spatial domain transmission filter again when the link fails, so as to re-determine a new optimal spatial domain transmission filter. When the receiving end terminal feeds back N CSI-RS resources, and when the spatial domain transmission filter selected by the transmitting end terminal fails, the transmitting end terminal may select one of the spatial domain transmission filters corresponding to the remaining N-1 CSI-RS resources fed back by the receiving end terminal for sidelink transmission, such as selecting the CSI-RS resource corresponding to the suboptimal measurement result, and thereby determining the spatial domain transmission filter corresponding to the CSI-RS resource. In this way, the process of re-selecting the optimal spatial domain transmission filter is avoided, and the speed of spatial domain transmission filter re-selection or spatial domain transmission filter failure recovery (beam failure recovery) is improved.

For example, in a case where the transmitting end terminal is required to transmit sidelink data to multiple receiving end terminals at the same time (e.g., the transmitting end terminal is required to transmit sidelink feedback information to multiple receiving end terminals at a same slot), when multiple preferred CSI-RS resources are fed back from the receiving end terminals, the transmitting end terminal may have a higher probability of selecting a spatial domain transmission filter to transmit sidewalk data to the multiple receiving end terminals at the same time, as opposed to a case where only one preferred CSI-RS resource is fed back. For example, the transmitting end terminal supports four spatial domain transmission filters, corresponding to spatial domain transmission filters 0-3, and when the receiving end terminal 1 feeds back only one preferred spatial domain transmission filter, such as spatial domain transmission filter 0, and the receiving end terminal 2 feeds back one preferred spatial domain transmission filter, such as spatial domain transmission filter 2, the transmitting end terminal is unable to transmit sidelink data to the two receiving end terminals at the same time. In contrast, when the receiving end terminal 1 feeds back two preferred spatial domain transmission filters, such as spatial domain transmission filters 0 and 1, and the receiving end terminal 2 feeds back two preferred spatial domain transmission filters, such as spatial domain transmission filters 1 and 2, the transmitting end terminal can transmit sidelink data to the two receiving end terminals at the same time through spatial domain transmission filter 1.

In some embodiments, the measurement results corresponding to the N CSI-RS resources are each greater than or equal to a first threshold value.

In some embodiments, the first threshold value is pre-configured or protocol-agreed; or, the first threshold value is configured by a network device; or, the first threshold value is configured by the first terminal device.

In some embodiments, the N CSI-RS resources correspond to first N CSI-RSs of the CSI-RSs received by the second terminal device in an order of the measurement results from high to low.

In some embodiments, the N CSI-RS resources include N1 first-class CSI-RS resources and N2 second-class CSI-RS resources.

The N1 first-class CSI-RS resources correspond to CSI-RSs received by the second terminal device, or the N1 first-class CSI-RS resources correspond to CSI-RSs received by the second terminal device and with measurement results that are each greater than or equal to the first threshold value; and indexes corresponding to the N2 second-class CSI-RS resources are determined by at least one CSI-RS resource of the N1 first-class CSI-RS resources, or indexes corresponding to the N2 second-class CSI-RS resources are determined by at least one CSI-RS resource of the multiple CSI-RS resources other than the N1 first-class CSI-RS resources, and the measurement results corresponding to the N2 second-class CSI-RS resources are each a default value, where N1 and N2 are positive integers, and N1+N2=N.

For example, the number of CSI-RSs detected by the second terminal device transmitted by the first terminal device is less than N, or the number of CSI-RS resources detected to satisfy a reporting condition for CSI-RSs is less than N, in which case the N CSI-RS resources include N1 first-class CSI-RS resources and N2 second-class CSI-RS resources.

When the first terminal device receives a feedback information (i.e., the first information) from the second terminal device, it can be determined that its corresponding CSI-RS resource index is an invalid index according to the default value.

In some embodiments, the default value is pre-configured or protocol-agreed; or, the default value is configured by a network device; or, the default value is configured by the first terminal device to the second terminal device; or, the default value is configured by the second terminal device to the first terminal device; or, the default value is configured by a third terminal device, which is a group head terminal of a communication group in which the first terminal device and the second terminal device are located.

In some embodiments, the group head terminal is a terminal that has at least one of the following functions within the communication group: resource management, resource allocation, resource coordination, resource configuration, and adding and discharging management of group members.

Specifically, for example, the default value indicates a default measurement result when there is no measurement result, and when the measurement result fed back by the receiving end terminal to the transmitting end terminal is the default value, it indicates that the receiving end terminal has no measurement result for the CSI-RS resource corresponding to the default value.

For example, in a case where the default value is a pre-configured or configured by a network device, the default value is included in the resource pool configuration information or the BWP configuration information.

For example, in a case where the default value is configured by the transmitting end terminal to the receiving end terminal (or, the receiving end terminal to the transmitting end terminal), e.g., during unicast link establishment, the transmitting end terminal transmits a PC5-RRC signaling to the receiving end terminal (or, the receiving end terminal to the transmitting end terminal), the PC5-RRC signaling carrying information about the default value.

In some embodiments, the default value is less than or equal to a second threshold value, or the default value corresponds to negative infinity or infinity.

In some embodiments, the second threshold value is pre-configured or protocol-agreed; or, the second threshold value is configured by a network device; or, the second threshold value is configured by the first terminal device.

In some embodiments, the default value may be less than or equal to a value corresponding to the lowest measurement result.

In some embodiments, in a case where indexes corresponding to the N2 second-class CSI-RS resources are determined by at least one CSI-RS resource of the N1 first-class CSI-RS resources, a resource index corresponding to a CSI-RS resource with the optimal or worst measurement result of the N1 first-class CSI-RS resources is selected as the index of the N2 second-class CSI-RS resources. For example, in FIGS. 14 and 15, N=3, there are four CSI-RS resources included in the CSI-RS resource set, but the second terminal device receives only two CSI-RSs (e.g., CSI-RS resource 1 and CSI-RS resource 2) with corresponding measurements of RSRP1=-10dBm and RSRP2=-20dBm, respectively; in addition to feeding back the corresponding resource indexes of CSI-RS resource 1 and CSI-RS resource 2, the second terminal device is further required to feed back a CSI-RS resource index, and the second terminal device selects the CSI-RS that has the optimal RSRP measurement result, i.e., CSI-RS resource 1, and feeds back its CSI-RS resource index; the second terminal device arranges the CSI-RS resources in accordance with RSRP measurement results in order from high to low, and thus the order of the CSI-RS resource indexes fed back is shown in FIG. 18. Therefore, among the three CSI-RS resource indexes fed back by the second terminal device, included are two CSI-RS resource indexes with a value of 1, and one CSI-RS resource index with a value of 2. When the first terminal device receives the feedback information from the second terminal device, it can be determined, based on the duplicated CSI-RS resource indexes 1, that one of the CSI-RS indexes 1 (e.g., the second CSI-RS resource index 1) is an invalid index.

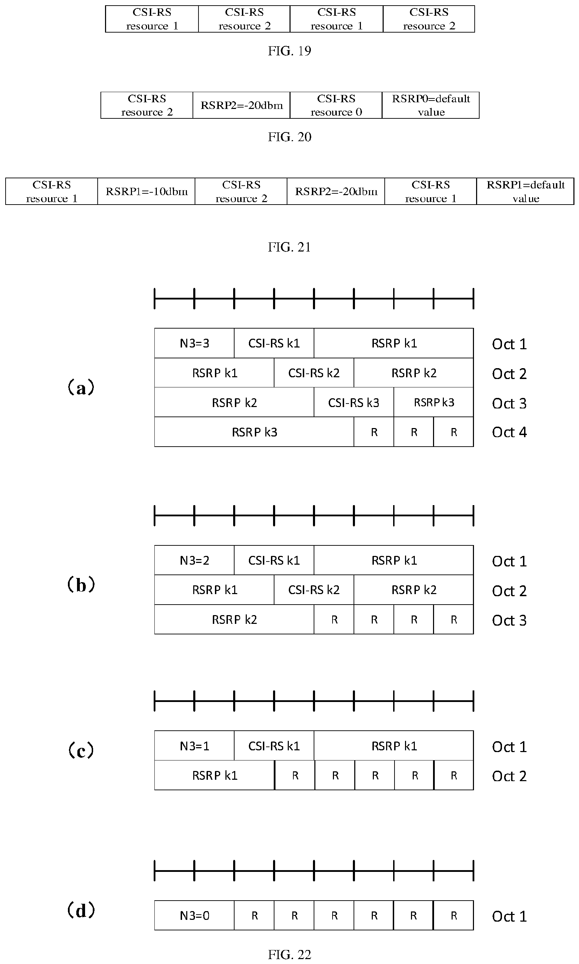

In some embodiments, in a case where indexes corresponding to the N2 second-class CSI-RS resources are determined by at least one CSI-RS resource of the N1 first-class CSI-RS resources, a resource index corresponding to a CSI-RS resource with the optimal or worst measurement result of the N1 first-class CSI-RS resources is selected as the index of the N2 second-class CSI-RS resources. For example, in FIGS. 14 and 15, N=4, there are four CSI-RS resources included in the CSI-RS resource set, but the second terminal device receives only two CSI-RSs (e.g., CSI-RS resource 1 and CSI-RS resource 2) with corresponding measurements of RSRP1=-10dBm and RSRP2=-20dBm, respectively; in addition to feeding back the corresponding resource indexes of CSI-RS resource 1 and CSI-RS resource 2, the second terminal device is further required to feed back two CSI-RS resource indexes; since there are measurement results for both CSI-RS resource 1 and CSI-RS resource 2, the second terminal device may repeat the feedback of CSI-RS resource 1 and CSI-RS resource 2, and thus the fed back CSI- RS resource indexes are in the order shown in FIG. 19. Therefore, among the four CSI-RS resource indexes fed back by the second terminal device, two CSI-RS resource indexes each have a value of 1, and two CSI-RS resource indexes each have a value of 2. When the first terminal device receives the feedback information from the second terminal device, one of the CSI-RS indexes can be determined based on the duplicated CSI-RS resource indexes (e.g., the second CSI-RS resource index 1 and second CSI-RS resource index 2) is an invalid index.

In some embodiments, when the number of CSI-RS resources detected by the second terminal device and satisfying a condition is N1 (N1<N), the second terminal device feeds back N CSI-RS resource information and N measurement results; where N1 satisfying CSI-RS resource information and their corresponding measurement results are included; included are further additional (N-N1) CSI-RS resource information, whose corresponding measurement results are default values.

Specifically, the CSI-RS resources satisfying the condition include the following two cases:

Case 1: The CSI-RS resources satisfying the condition include CSI-RS resources detected by the second terminal device. That is, the second terminal device detects SCI transmitted by the first terminal device, and when the SCI is detected, the resource information of the CSI-RS transmitted by the first terminal device can be determined through the SCI, and the second terminal device can measure the CSI-RS and obtain the corresponding measurement result.

Case 2: The CSI-RS resource satisfying the condition includes CSI-RS resources detected by the second terminal device and having measurement result exceeding the first threshold value. That is, the second terminal device feeds back the CSI-RS resource information only when the second terminal device detects the CSI-RS resource and its measurement result exceeds the first threshold value. For example, the second terminal device detects three CSI-RS resources (e.g., CSI-RS resource 1, CSI-RS resource 2, and CSI-RS resource 3) transmitted by the first terminal device, the corresponding measurement results are RSRP1=-10dBm, RSRP2=-20dBm, and RSRP3=-120dBm, respectively, and the RSRP threshold (i.e., the first threshold value ) is -80 dBm; since the measurement result corresponding to the CSI-RS resource 3 is lower than the RSRP threshold, the second terminal device feeds back the CSI-RS resource information including the CSI-RS resource 1 and the CSI-RS resource 2, and does not feed back the CSI-RS resource 3.

For example, specifically, the second terminal device may select any one CSI-RS resource (in addition to the CSI-RS resources that satisfy the condition) to be associated with the default value. For example, in FIGS. 14 and 15, N=2 and the CSI-RS resource set includes 4 CSI-RS resources, but the second terminal device receives only one CSI-RS (e.g., CSI-RS resource 2) and the measurement result is RSRP2=-20dBm (satisfying the condition in case 1 above), then the second terminal device, in addition to feeding back the CSI-RS resource corresponding to the index 2 and its corresponding measurement result, the second terminal device is further required to feed back a CSI-RS resource index and the corresponding measurement result; the second terminal device arbitrarily selects one of the CSI-RS resources 0/1/3 and feeds back the index value thereof, and the corresponding measurement result thereof is set to the default value. For example, the second terminal device selects CSI-RS resource 0, sets its measurement result to the default value, and feeds it to the first terminal device, as shown in FIG. 20.

Specifically, for example, in addition to feeding back information on the N1 CSI-RS resources that satisfy the condition and their corresponding measurement results, when feeding back information on the other N-N1 CSI-RS resources, the second terminal device selects a CSI-RS resource from the N1 CSI-RS resources that satisfy the condition, and sets its measurement result to the default value. For example, a CSI-RS with the optimal or the worst measurement result among the N1 CSI-RS resources is selected, or one CSI-RS is selected arbitrarily or randomly. For example, in FIGS. 14 and 15, N=3, and the CSI-RS resource set includes four CSI-RS resources, but the second terminal device receives only two CSI-RSs (e.g., CSI-RS resource 1 and CSI-RS resource 2), which have corresponding measurements of RSRP1 = -10 dBm and RSRP2 = -20 dBm, respectively, and the RSRP threshold is - 80 dBm; therefore, the measurements of the two CSI-RS resources are greater than the threshold (satisfying the conditions in case 2 above), and the second terminal device, in addition to feeding back the CSI-RS resource 1 and CSI-RS resource 2 and their corresponding measurement results, the second terminal device is further required to feed back a CSI-RS resource index and its corresponding measurement result; the second terminal device selects the CSI-RS with the optimal RSRP measurement result, i.e., the CSI-RS resource 1, and sets the measurement value thereof to the default value. That is, among the three CSI-RS resource indexes fed back by the second terminal device, two CSI-RS resource indexes each have a value of 1, one CSI-RS resource index has a value of 2, and the two CSI-RS resource index values correspond to a measurement result of -10 dBm and a default value, respectively, as shown in FIG. 21.

In some embodiments, the first measurement information includes a quantized index information of the measurement result corresponding to each of the N CSI-RS resources.

In some embodiments, the indexes of the N CSI-RS resources and the quantized index information of the measurement results corresponding to the N CSI-RS resources occupy a number of bits of:

$$(A + B) \times N;$$

where A denotes the number of bits occupied by one of the indexes of the N CSI-RS resources, B denotes the number of bits occupied by the quantized index information of the measurement result corresponding to one of the CSI-RS resources of the N CSI-RS resources, and

$$A = \lceil \log_2 M \rceil.$$

For example, when M=8, then A=3. The RSRP (or SINR) measurement result is quantized, and the B bits are applied to indicate the value of the quantized RSRP (or SINR), e.g., B=7; the quantized RSRP is in a range of [B1, B2] dBm (e.g., [-140, -44] dBm) in steps of 1 dBm.

In some embodiments, the first measurement information includes a quantized index information of a first measurement result and N-1 differential quantized index information, where the first measurement result corresponds to a highest value among the measurement results corresponding to the N CSI-RS resources.

In some embodiments, the indexes of the N CSI-RS resources and the quantized index information of the measurement results corresponding to the N CSI-RS resources occupy a number of bits of:

$$A \times N + B + C \times (N - 1);$$

where A denotes the number of bits occupied by one of the indexes of the N CSI-RS resources; B denotes the number of bits occupied by the quantized index information of a first CSI-RS resource in the N CSI-RS resources, and the first CSI-RS resource is a CSI-RS with the greatest measurement result in the N CSI-RS resources; C denotes the number of bits occupied by the quantized index information of a difference between the measurement results of another CSI-RS resource among the N CSI-RS resources and the measurement result of the first CSI-RS resource, or C denotes the number of bits occupied by the quantized index information of a difference between the measurement results of two CSI-RS resources of the N CSI-RS resources, and $A = \lceil \log_2 M \rceil$.

Specifically, for example, the RSRP (or SINR) measurement results are quantized, and the measurement result having the greatest RSRP (or SINR) is represented by B bits, and the rest of the measurement results are represented by differential RSRP (or differential SINR), e.g., B=7, and the differential RSRP is represented by C bits, e.g., C=4; and the measurement result of the RSRP represented by the B bits are in a range of [B1, B2] dBm, (e.g., [-140, -44] dBm) in steps of 1 dBm, and the differential RSRP represents a range of [C1, C2] dB (e.g., [-30, 0] dB) in steps of 2 dB. The differential RSRP is obtained relative to the greatest RSRP measurement result, i.e., the differential RSRP represents the difference with the greatest RSRP measurement result. Alternatively, the differential RSRP is obtained relative to an RSRP measurement result that is adjacent to and greater than it.

For example, assuming that the three measured RSRP results are -60 dBm, -70 dBm, and -90 dBm, respectively: when the first differential RSRP method is used, the greatest RSRP corresponds to -60 dBm, and the remaining two differential RSRPs are -10 dB and -30 dB, respectively; when the second differential RSRP method is used, the greatest RSRP corresponds to -60 dBm, and the remaining two differential RSRPs are -10dB and -20dB, respectively.

In some embodiments, the second terminal device performs RSRP measurements according to the CSI-RS and feeds back the RSRP measurement results. Usually, in order to be able to feed back the measurement results quickly, the second terminal device usually adopts sidelink control information (SCI) or media access control control element (MAC) to carry the fed back CSI-RS resource information and the corresponding measurement results. Therefore, the RSRP measurement results are required to be quantized. Moreover, the second terminal device feeds back the RSRP measurement result of Layer 1 (i.e., L1 RSRP), i.e., without filtering processing of Layer 3, and the RSRP result obtained from the physical layer measurement is directly quantized and fed back to the first terminal device.

For example, 7 bits are used to quantize the measured RSRP as shown in Table 1 below.

Table 1

| Reported value | L1 RSRP | Unit |
|---|---|---|
| RSRP_0 | Invalid | dBm |
| RSRP_1 | Invalid | dBm |
| RSRP_2 | Invalid | dBm |
| RSRP_3 | Invalid | dBm |
| RSRP_4 | Invalid | dBm |
| RSRP_5 | Invalid | dBm |
| RSRP_6 | Invalid | dBm |
| RSRP_7 | Invalid | dBm |
| RSRP_8 | Invalid | dBm |
| RSRP_9 | Invalid | dBm |
| RSRP_10 | Invalid | dBm |

(continued)

| Reported value | L1 RSRP | Unit |
|---|---|---|
| RSRP_11 | Invalid | dBm |
| RSRP_12 | Invalid | dBm |
| RSRP_13 | Invalid | dBm |
| RSRP_14 | Invalid | dBm |
| RSRP_15 | Invalid | dBm |
| RSRP_16 | RSRP<-140 | dBm |
| RSRP_17 | $-140 \leq RSRP < -139$ | dBm |
| RSRP_18 | $-139 \leq RSRP < -138$ | dBm |
| ... | | ... |
| RSRP_111 | $-46 \leq RSRP < -45$ | dBm |
| RSRP_112 | $-45 \leq RSRP < -44$ | dBm |
| RSRP_113 | $-44 \leq RSRP$ | dBm |
| RSRP_114 | Invalid | dBm |
| RSRP_115 | Invalid | dBm |
| RSRP_116 | Invalid | dBm |
| RSRP_117 | Invalid | dBm |
| RSRP_118 | Invalid | dBm |
| RSRP_119 | Invalid | dBm |
| RSRP_120 | Invalid | dBm |
| RSRP_121 | Invalid | dBm |
| RSRP_122 | Invalid | dBm |
| RSRP_123 | Invalid | dBm |
| RSRP_124 | Invalid | dBm |
| RSRP_125 | Invalid | dBm |
| RSRP_126 | Invalid | dBm |
| RSRP_127 | Infinity | dBm |

From Table 1 above, it can be seen that the quantized RSRP has a range of [-140, 44] dBm, with measurements less than a least value (i.e., -140 dBm) being represented by one RSRP index and measurements greater than or equal to a greatest value (i.e., 44 dBm) being represented by one RSRP index. Therefore, the default value may be defined as being less than or equal to the least value in the quantized range, for example, the default RSRP is -141 dBm, i.e., less than the quantized least value; in this case, the quantized RSRP may be represented as shown in

the following table. When the index corresponding to the RSRP fed back by the second terminal device to the first terminal device is RSRP_15, it means that the second terminal device feeds back the default RSRP value, i.e., the second terminal device does not detect the CSI-RS resource corresponding to the RSRP measurement value.

As another example, 7 bits are used to quantize the measured RSRP as shown in Table 2 below.

Table 2

| Reported value | L1 RSRP | Unit |
|---|---|---|
| RSRP_0 | Invalid | dBm |
| RSRP_1 | Invalid | dBm |

(continued)

| Reported value | L1 RSRP | Unit |
|---|---|---|
| RSRP_2 | Invalid | dBm |
| RSRP_3 | Invalid | dBm |
| RSRP_4 | Invalid | dBm |
| RSRP_5 | Invalid | dBm |
| RSRP_6 | Invalid | dBm |
| RSRP_7 | Invalid | dBm |
| RSRP_8 | Invalid | dBm |
| RSRP_9 | Invalid | dBm |
| RSRP_10 | Invalid | dBm |
| RSRP_11 | Invalid | dBm |
| RSRP_12 | Invalid | dBm |
| RSRP_13 | Invalid | dBm |
| RSRP_14 | Invalid | dBm |
| RSRP_15 | RSRP<-141 | dBm |
| RSRP_16 | -141<RSRP<-140 | dBm |
| RSRP_17 | -140≤RSRP<-139 | dBm |
| RSRP_18 | -139≤RSRP<-138 | dBm |
| ... | | ... |
| RSRP_111 | -46≤RSRP<-45 | dBm |
| RSRP_112 | -45≤RSRP<-44 | dBm |
| RSRP_113 | -44≤RSRP | dBm |
| RSRP_114 | Invalid | dBm |
| RSRP_115 | Invalid | dBm |
| RSRP_116 | Invalid | dBm |
| RSRP_117 | Invalid | dBm |
| RSRP_118 | Invalid | dBm |
| RSRP_119 | Invalid | dBm |
| RSRP_120 | Invalid | dBm |
| RSRP_121 | Invalid | dBm |
| RSRP_122 | Invalid | dBm |
| RSRP_123 | Invalid | dBm |
| RSRP_124 | Invalid | dBm |
| RSRP_125 | Invalid | dBm |
| RSRP_126 | Invalid | dBm |
| RSRP_127 | Infinity | dBm |

As another example, the default RSRP is set to negative infinity (or a very small value such as -1000 dBm), or the default RSRP is set to infinity (or a very large value such as 1000 dBm); in this case, the quantized RSRP may be expressed as shown in Table 3-1 and Table 3-2 below, respectively. When the index corresponding to the RSRP fed back by the second terminal device to the first terminal device is RSRP_0 in Table 3-1 (or RSRP_127 in Table 3-2), it means that the second terminal device feeds back the default RSRP value, i.e., the second terminal device does not detect the CSI-RS resource corresponding to the RSRP measurement value.

Table 3-1

| Reported Value | L1 RSRP | Unit |
|---|---|---|
| RSRP_0 | Negative infinity | dBm |
| RSRP_1 | Invalid | dBm |
| RSRP_2 | Invalid | dBm |
| RSRP_3 | Invalid | dBm |
| RSRP_4 | Invalid | dBm |
| RSRP_5 | Invalid | dBm |
| RSRP_6 | Invalid | dBm |
| RSRP_7 | Invalid | dBm |
| RSRP_8 | Invalid | dBm |
| RSRP_9 | Invalid | dBm |
| RSRP_10 | Invalid | dBm |
| RSRP_11 | Invalid | dBm |
| RSRP_12 | Invalid | dBm |
| RSRP_13 | Invalid | dBm |
| RSRP_14 | Invalid | dBm |
| RSRP_15 | Invalid | dBm |
| RSRP_16 | RSRP<-140 | dBm |
| RSRP_17 | $-140 \leq$ RSRP$<-139$ | dBm |
| RSRP_18 | $-139 \leq$ RSRP$<-138$ | dBm |
| ... | | ... |
| RSRP_111 | $-46 \leq$ RSRP$<-45$ | dBm |
| RSRP_112 | $-45 \leq$ RSRP$<-44$ | dBm |
| RSRP_113 | $-44 \leq$ RSRP | dBm |
| RSRP_114 | Invalid | dBm |
| RSRP_115 | Invalid | dBm |
| RSRP_116 | Invalid | dBm |
| RSRP_117 | Invalid | dBm |
| RSRP_118 | Invalid | dBm |
| RSRP_119 | Invalid | dBm |
| RSRP_120 | Invalid | dBm |
| RSRP_121 | Invalid | dBm |
| RSRP_122 | Invalid | dBm |
| RSRP_123 | Invalid | dBm |
| RSRP_124 | Invalid | dBm |
| RSRP_125 | Invalid | dBm |

(continued)

| Reported Value | L1 RSRP | Unit |
|---|---|---|
| RSRP_126 | Invalid | dBm |
| RSRP_127 | Invalid | dBm |

Table 3-2

| Reported Value | L1 RSRP | Unit |
|---|---|---|
| RSRP_0 | Invalid | dBm |
| RSRP_1 | Invalid | dBm |
| RSRP_2 | Invalid | dBm |
| RSRP_3 | Invalid | dBm |
| RSRP_4 | Invalid | dBm |
| RSRP_5 | Invalid | dBm |
| RSRP_6 | Invalid | dBm |
| RSRP_7 | Invalid | dBm |
| RSRP_8 | Invalid | dBm |
| RSRP_9 | Invalid | dBm |
| RSRP_10 | Invalid | dBm |
| RSRP_11 | Invalid | dBm |
| RSRP_12 | Invalid | dBm |
| RSRP_13 | Invalid | dBm |
| RSRP_14 | Invalid | dBm |
| RSRP_15 | Invalid | dBm |
| RSRP_16 | $RSRP < -140$ | dBm |
| RSRP_17 | $-140 \leq RSRP < -139$ | dBm |
| RSRP_18 | $-139 \leq RSRP < -138$ | dBm |
| ... | | ... |
| RSRP_111 | $-46 \leq RSRP < -45$ | dBm |
| RSRP_112 | $-45 \leq RSRP < -44$ | dBm |
| RSRP_113 | $-44 \leq RSRP$ | dBm |
| RSRP_114 | Invalid | dBm |
| RSRP_115 | Invalid | dBm |
| RSRP_116 | Invalid | dBm |
| RSRP_117 | Invalid | dBm |
| RSRP_118 | Invalid | dBm |
| RSRP_119 | Invalid | dBm |
| RSRP_120 | Invalid | dBm |
| RSRP_121 | Invalid | dBm |
| RSRP_122 | Invalid | dBm |

(continued)

| Reported Value | L1 RSRP | Unit |
|---|---|---|
| RSRP_123 | Invalid | dBm |
| RSRP_124 | Invalid | dBm |
| RSRP_125 | Invalid | dBm |
| RSRP_126 | Invalid | dBm |
| RSRP_127 | Infinity | dBm |

The above example applies when N CSI-RSs and their measurements are fed back from the second terminal device, and for each measurement the corresponding RSRP result (e.g., 7-bit quantized result) is fed back. However, in general, in order to reduce the overhead of the feedback signaling, the second terminal device usually adopts differential RSRP feedback for multiple RSRP measurement results.

For example, when the second terminal device is required to feedback N CSI-RS resource information and their corresponding RSRP measurements, for the one with the optimal RSRP measurement result, the second terminal device feeds back its corresponding CSI-RS and the corresponding RSRP measurement result (e.g., the 7-bit quantized RSRP index in Table 1 above), but for the other N-1 measurements, the second terminal device usually adopts the differential RSRP feedback method. The differential RSRP may include two cases.

The first case: i.e., the difference relative to the optimal RSRP result.

For example, the second terminal device detects three CSI-RS resources, corresponding to CSI-RS resource 1, CSI-RS resource 2, and CSI-RS resource 3, and perform measurements to obtain three RSRP results as RSRP1=-10dBm, RSRP2=-20dBm, and RSRP3=-35dBm, respectively; when the differential RSRP feedback is adopted, the three RSRP results fed back by the second terminal device are:

The index 1 of CSI-RS resource 1 and its corresponding RSRP measurement, i.e., RSRP1 = -10 dBm;

The index 2 of CSI-RS resource 2 and its differential RSRP measurement result relative to RSRP1, i.e., $\Delta$RSRP=-10dB, whose corresponding differential RSRP index is "DIFFRSRP_5" according to Table 4 below;

The index 3 of CSI-RS resource 3 and its differential RSRP measurement relative to that of RSRP1, i.e., $\Delta$RSRP = -25 dB, whose corresponding differential RSRP index is "DIFFRSRP_12" according to Table 4 below.

The second case: i.e., the difference between one RSRP measurement result and another RSRP measurement result that is adjacent to and greater than or equal to the RSRP measurement result.

For example, the second terminal device detects three CSI-RS resources, corresponding to CSI-RS resource 1, CSI-RS resource 2, and CSI-RS resource 3, and performs measurements to obtain three RSRP results of RSRP1=-10 dBm, RSRP2=-20 dBm, and RSRP3=-35 dBm, respectively; when differential RSRP feedback is adopted, the three RSRP results fed back by the second terminal device are:

The index 1 of CSI-RS resource 1 and its corresponding RSRP measurement, i.e., RSRP1 = -10 dBm;

The index 2 of CSI-RS resource 2 and its differential RSRP measurement result relative to RSRP1, i.e., $\Delta$RSRP=-10dB, whose corresponding differential RSRP index is "DIFFRSRP_5" according to Table 4 below;

The index 3 of CSI-RS resource 3 and its differential RSRP measurement result relative to RSRP2, i.e., $\Delta$RSRP = -15 dB, and its corresponding differential RSRP index is "DIFFRSRP_7" according to Table 4 below.

Table 4

| Reported value | Measured quantized value (Difference between the measured RSRP and the strongest RSRP) | Unit |
|---|---|---|
| DIFFRSRP_0 | $0 \geq \Delta$RSRP$>$-2 | dB |
| DIFFRSRP_1 | $-2 \geq \Delta$RSRP$>$-4 | dB |
| DIFFRSRP_2 | $-4 \geq \Delta$RSRP$>$-6 | dB |
| DIFFRSRP_3 | $-6 \geq \Delta$RSRP$>$-8 | dB |
| DIFFRSRP_4 | $-8 \geq \Delta$RSRP$>$-10 | dB |
| DIFFRSRP_5 | $-10 \geq \Delta$RSRP$>$-12 | dB |
| DIFFRSRP_6 | $-12 \geq \Delta$RSRP$>$-14 | dB |
| DIFFRSRP_7 | $-14 \geq \Delta$RSRP$>$-16 | dB |
| DIFFRSRP_8 | $-16 \geq \Delta$RSRP$>$-18 | dB |

(continued)

| Reported value | Measured quantized value (Difference between the measured RSRP and the strongest RSRP) | Unit |
|---|---|---|
| DIFFRSRP_9 | $-18 \geq \Delta RSRP > -20$ | dB |
| DIFFRSRP_10 | $-20 \geq \Delta RSRP > -22$ | dB |
| DIFFRSRP_11 | $-22 \geq \Delta RSRP > -24$ | dB |
| DIFFRSRP_12 | $-24 \geq \Delta RSRP > -26$ | dB |
| DIFFRSRP_13 | $-26 \geq \Delta RSRP > -28$ | dB |
| DIFFRSRP_14 | $-28 \geq \Delta RSRP > -30$ | dB |
| DIFFRSRP_15 | $-30 \geq \Delta RSRP$ | dB |

In some embodiments, when using differential RSRP for feedback, a default value for differential RSRP may be defined. For example, in the Table 4, the last differential RSRP index (i.e., DIFFRSRP_15) is set to a default value, i.e., when the differential RSRP fed back from the second terminal device corresponds to this index, it means that the second terminal device does not detect the CSI-RS resource associated with the differential RSRP measurement.

In some embodiments, the first information includes indexes of N3 CSI-RS resources, where the N3 CSI-RS resources are determined by the second terminal device according to the measurement results of the received CSI-RSs, N3 < N; N is the number of CSI-RS resources to be fed back or reported by the second terminal device, N3 and N are each a positive integer, and $N \leq M$.

In some embodiments, the N3 CSI-RS resources correspond to CSI-RSs received by the second terminal device, or, the N3 CSI-RS resources correspond to CSI-RSs received by the second terminal device and having corresponding measurement results each greater than or equal to the first threshold value.

In some embodiments, the indexes of the N3 CSI-RS resources are in an order of the corresponding measurement results of the N3 CSI-RS resources from high to low, or, the indexes of the N3 CSI-RS resources are in an order of the corresponding measurement results of the N3 CSI-RS resources from low to high. Specific reference may be made to the above description relating to the quantized index information of the measurement result corresponding to each of the N CSI-RS resources, which will not be repeated herein.

In some embodiments, the first information further includes a second measurement information configured to indicate the measurement results corresponding to the N3 CSI-RS resources.

In some embodiments, the second measurement information includes a quantized index information of the measurement result corresponding to each of the N3 CSI-RS resources. Specific reference may be made to the above description relating to the quantized index information of the measurement result corresponding to each of the N CSI-RS resources, which will not be repeated herein.

In some embodiments, the second measurement information includes a quantized index information of a second measurement result and N3-1 differential quantized index information; where the second measurement result corresponds to a highest value among the measurement results corresponding to the N3 CSI-RS resources. Specific reference may be made to the above description relating to the quantized index information of the measurement result corresponding to each of the N CSI-RS resources, which will not be repeated herein.

In some embodiments, the first information further includes a third indication information, which is configured to indicate a value of the N3.

In some embodiments, the first information further includes a fourth indication information, which is configured to indicate a value of the N; or, configured to indicate a number of CSI-RS resources fed back from the second terminal device to the first terminal device; or, configured to indicate a number of measurement results fed back from the second terminal device to the first terminal device.

In some embodiments, the first terminal device obtains a fifth indication information, which is configured to indicate a value of the N.

In some embodiments, the first terminal device obtains the fifth indication information according to a preconfigured information; or, the first terminal device receives the fifth indication information transmitted by a network device; or, the first terminal device receives the fifth indication information transmitted by the second terminal device; or, the first terminal device receives the fifth indication information transmitted by a third terminal device, where the third terminal device is a group head terminal of a communication group in which the first terminal device and the second terminal device are located.

In some embodiments, the first terminal device transmits a sixth indication information to the second terminal device, and the sixth indication information is configured to indicate a value of the N.

In some embodiments, that second terminal device obtains a sixth indication information, and the sixth indication information is configured to indicate a value of the N.

In some embodiments, the second terminal device obtains the sixth indication information according to a pre-configured information; or, the second terminal device receives the sixth indication information transmitted by a network device; or, the second terminal device receives the sixth indication information transmitted by the first terminal device; or, the second terminal device receives the sixth indication information transmitted by a third terminal device, where the third terminal device is a group head terminal of a communication group in which the first terminal device and the second terminal device are located.

In some embodiments, the group head terminal is a terminal that has at least one of the following functions within the communication group: resource management, resource allocation, resource coordination, resource configuration, and adding and discharging management of group members.

In some embodiments, the measurement result includes a sidelink RSRP and/or a sidelink SINR.

In some embodiments, the first information is carried through one of the following:

sidelink control information (SCI), media access control control element (MAC CE), physical sidelink feedback channel (PSFCH), and PC5- RRC signaling.

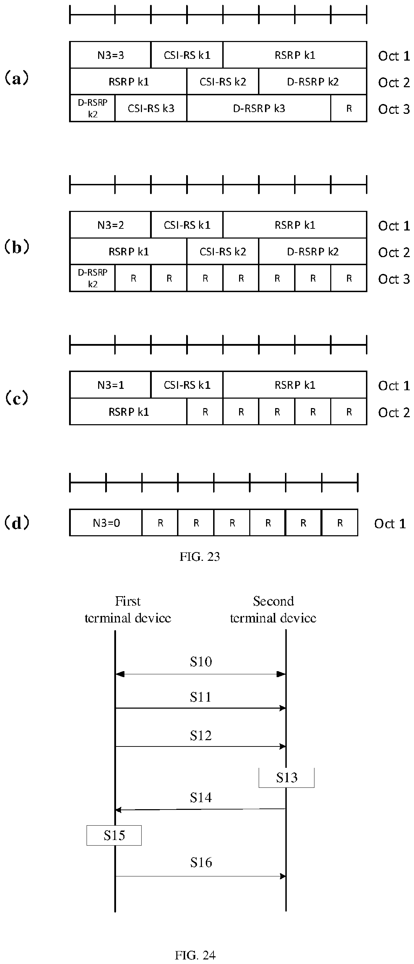

In some embodiments, when the first information is carried through MAC CE, the format of the MAC CE may be as shown in FIG. 22 or FIG. 23.

For example, for RSRPs to be fed back, when corresponding quantized RSRP indexes (as in Table 1) are fed back, i.e., when each RSRP is represented by 7 bits, N3 CSI-RS resource indexes along with their corresponding RSRP measurements are included in the MAC CE, and an information field indicating the value of N3 is included. As shown in FIG. 22, N=3, i.e., at most 3 CSI-RS resources and their corresponding measurement results are fed back, and 4 CSI-RS resources are included in the CSI-RS resource set; therefore, 2 bits are used to indicate the CSI-RS indexes; and the value of N3 is less than or equal to N, i.e., N3<=3; therefore, N3 also requires a 2-bit representation; in FIG. 22, k1/k2/k3 indicate respectively the index information corresponding to the 3 CSI- RS resources; in this method, since each RSRP measurement result is represented by 7 bits, the order of each CSI-RS resource in the MAC CE may be not agreed upon; in some embodiments, the greater the RSRP measurement result is, the higher the position in the MAC CE is. Oct1 denotes byte 1, and so on. (a), (b), and (c) in FIG. 22 can be seen as the cases N3=3, N3=2, and N3=1, respectively.

In particular, when N3=0, i.e., when the second terminal device does not receive any CSI-RS transmitted by the first terminal device, or when none of the detected CSI-RS resources satisfy the condition, the second terminal device may transmit an indication information (i.e., a second information) to the first terminal device for indicating that the second terminal device does not receive the CSI-RS, or for instructing that the first terminal device retransmit the CSI-RS in turn. In some embodiments, the second terminal device may transmit the indication information (i.e., the second information) through a SCI, MAC CE, or PC5-RRC; as illustrated in (d) in FIG. 22, the indication information (i.e., the second information) is carried through the MAC CE.

For example, when differential RSRP is adopted for feedback, the highest RSRP measurement is represented by 7 bits (as in Table 1), and other RSRP measurements are represented by 4-bit differential RSRP (as in Table 4). The N3 CSI-RS resource indexes and their corresponding RSRP measurements are included in the MAC CE. As shown in FIG. 23, N=3, i.e., at most 3 CSI-RS resources and their corresponding measurement results are fed back, and 4 CSI-RS resources are included in the CSI-RS resource set; therefore, 2 bits are used to represent the CSI-RS indexes; and the value of N3 is less than or equal to N, i.e., N3<=3; therefore, N3 also needs a 2-bit representation; in FIG. 23, k1/k2/k3 indicate the respectively the index information corresponding to the 3 CSI- RS resources, where CSI-RS k1 denotes the CSI-RS resource corresponding to the highest RSRP measurement result, CSI-RS k2 denotes the CSI-RS resource corresponding to the second highest RSRP measurement result, and CSI-RS k3 denotes the CSI-RS resource corresponding to the third highest RSRP measurement result. In this method, the order of the CSI-RS resources in the MAC CE is in an order of the RSRP measurement results from high to low (or low to high). Oct1 denotes byte 1, and so on. In FIG. 23, (a), (b), and (c) can be seen as the cases N3=3, N3=2, and N3=1, respectively.

In particular, when N3=0, i.e., when the second terminal device does not receive any CSI-RS transmitted by the first terminal device, or when none of the detected CSI-RS resources satisfy the condition, the second terminal device may transmit an indication information (i.e., a second information) to the first terminal device for indicating that the second terminal device does not receive the CSI-RS, or for instructing that the first terminal device retransmit the CSI-RS in turn. In some embodiments, the second terminal device may transmit the indication information (i.e., the second information) through a SCI, MAC CE, or PC5-RRC; as illustrated in (d) in FIG. 23, the indication information (i.e., the second information) is carried through the MAC CE.

In some embodiments, when the first information is carried through SCI, the first information is specifically carried through a second order SCI.

In some embodiments, in a case where the first information is carried through a PSFCH, a time domain position of the PSFCH is determined based on an eighth indication information and a first time domain position, and/or, a frequency domain position of the PSFCH is determined based on a first frequency domain position; where the eighth indication information is configured to indicate a time domain interval between a time domain resource of the PSFCH and the first time domain position.

In some embodiments, the first time domain position includes, but is not limited to, at least one of the following: a time domain position corresponding to an end position of the first delay boundary, a time domain position corresponding to an indication information transmitted by the first terminal device for indicating a value of the M, a time domain position corresponding to an indication information transmitted by the first terminal device for indicating a value of the N, a time domain position corresponding to an indication information transmitted by the first terminal device for indicating that the first terminal device will transmit the CSI-RS used for selecting a spatial domain transmission filter position, a time domain position where a first CSI-RS transmitted (a CSI-RS firstly transmitted) by the first terminal device is located, and a time domain position where a last CSI-RS transmitted by the first terminal device is located.

In some embodiments, the eighth indication information is obtained by the second terminal device from the resource pool configuration information; or, the eighth indication information is obtained by the second terminal device through the first terminal device; or, the eighth indication information is obtained by the second terminal device through a third terminal device, which is a group head terminal of a communication group in which the first terminal device and the second terminal device are located.

In some embodiments, the first frequency domain position includes at least one of the following:
a starting frequency domain position for the first terminal device transmitting a PSCCH or PSSCH corresponding to an indication information for indicating a value of the M, a starting frequency domain position for the first terminal device transmitting a PSCCH or the PSSCH corresponding to an indication information for indicating a value of the N, a starting frequency domain position for the first terminal device transmitting a PSCCH or the PSSCH corresponding to an indication information for indicating that the first terminal device will transmit CSI-RSs for selecting a spatial domain transmission filter, a start frequency domain position where a first CSI-RS transmitted (a CSI-RS firstly transmitted) by the first terminal device is located, and a start frequency domain position where a last CSI-RS transmitted by the first terminal device is located.

In some embodiments, when the first information is carried through PC5-RRC signaling, the first information is specifically carried through a sidelink measurement report signaling.

In some embodiments, the first terminal device selects a target CSI-RS resource according to the first information, and a spatial domain transmission filter corresponding to the target CSI-RS resource is the target spatial domain transmission filter.

In some embodiments, the first terminal device transmits a second sidelink configuration information to the second terminal device for configuring at least one transmission configuration indicator (TCI) state, where the at least one TCI state includes a first TCI state, and a reference signal included in the first TCI state is a CSI-RS corresponding to the target CSI-RS resource.

In some embodiments, the second sidelink configuration information may be configured through PC5-RRC or MAC CE.

As can be seen from the previous description, the first terminal device may apply different transmission beams to transmit the CSI-RS resources, and the second terminal device may apply a same receiving beam to receive the CSI-RS resources and measure and report according to the CSI-RS resources, such that the first terminal device may determine the target transmission beam according to the report quantity. In this case, the determined target transmission beam corresponds to the receiving beam, i.e., when the first terminal device transmits a signal through the target transmission beam, the second terminal device has optimal sidelink transmission performance when it receives the signal through the receiving beam.

Further, in some embodiments of the present disclosure, when the first terminal device transmits the CSI-RS resources through different transmission beams, the second terminal device receive the CSI-RS resources through different receiving beam by means of polling s, to determine the target receiving beam corresponding to each receiving beam to obtain at least one TCI state.

By way of example, the first terminal device transmits the CSI-RS resources separately through four transmission beams (transmission beam 0 to spatial transmission beam 3), and the second terminal device may receive the CSI-RS resources through four receiving beams (receiving beam 0 to spatial receiving beam 3). For example, when the first terminal device transmits the CSI-RS resources separately through the four transmission beams (transmission beam 0 to spatial domain transmission beam 3), the second terminal device first receives the CSI-RS resources through the receiving beam 0, and performs the measurements and reporting according to the CSI-RS resources, such that the first terminal device can determine a target transmission beam according to the report quantity, in which case the target receiving beam corresponds to the receiving beam 0; when the first terminal device transmits the CSI-RS resources separately through the four transmission beams (transmission beam 0 to spatial transmission beam 3), the second terminal device receives the CSI-RS resources through the receiving beam 1 and performs the measurements and reporting according to the CSI-RS resources, such that the first terminal device can determine a target transmission beam according to the report quantity, in which case the target receiving beam corresponds to the receiving beam 1; polling to perform the above process can determine the target transmission beam corresponding to each receiving beam.

In some embodiments, a quasi-common-location (QCL) type included in the first TCI state is QCL-TypeD.

In some embodiments, the first terminal device transmits a seventh indication information to the second terminal device, and the seventh indication information is configured to indicate the first TCI state. For example, the seventh indication information includes an index information corresponding to the first TCI state.

In some embodiments, the seventh indication information is carried by one of the following:

sidelink control information (SCI), media access control control element (MAC CE), and PC5- RRC signaling.

In some embodiments, the first terminal device indicates activation of sidelink feedback when the seventh indication information is carried through SCI or MAC CE.

In some implementations, the first terminal device transmits sidelink data to the second terminal device through the target spatial domain transmission filter.

In some embodiments, the first terminal device transmits a third sidelink configuration information to the second terminal device, and the third configuration information is configured to configure a second delay boundary.

In some embodiments, the third sidelink configuration information may be the same configuration information as the first sidelink configuration information.

In some embodiments, within a time range determined according to the second delay boundary, the first terminal device expects the second terminal device to perform a report or feedback regarding the CSI-RS; and/or, outside the time range determined according to the second delay boundary, the first terminal device does not expect the second terminal device to perform a report or feedback regarding the CSI-RS.

In some embodiments, the first terminal device determines the second time unit according to a fifth time unit and the first delay boundary. That is, the second time unit may be determined based on the fifth time unit and the first delay boundary.

In some embodiments, a time domain position of the fifth time unit is determined based on at least one of the following:

a time unit in which the first sidelink configuration information is located;
a time unit in which the second sidelink configuration information is located;
a time unit in which the first indication information is located; and
a time unit in which the second indication information is located.

In some embodiments, the first terminal device receives the first information transmitted by the second terminal device at a first time unit, where the time unit is located before a sixth time unit determined based on the second delay boundary.

In some embodiments, the first terminal device determines the sixth time unit according to a seventh time unit and the second delay boundary. That is, the sixth time unit may be determined based on the seventh time unit and the second delay boundary.

In some embodiments, the seventh time unit is determined based on one of the following:

a time unit in which the first sidelink configuration information is located;
a time unit in which the second sidelink configuration information is located;
a time unit in which the first indication information is located;
a time unit in which the second indication information is located;
the fifth time unit; and
the second time unit.

In some embodiments, the seventh time unit may be the second time unit.

In some embodiments, the first time unit is located within a time range determined according to the second time unit and the sixth time unit.

In some embodiments, the first delay boundary is represented as a first number of slots, and the second delay boundary is represented as a second number of slots.

In some embodiments, a start position of the first time range is determined based on a slot in which the first configuration information is located, and an end position of the first time range is determined based on the first delay boundary. In some embodiments, the end position of the first time range is a time domain position corresponding to the second time unit.

In some embodiments, a start position of the second time range is determined based on the end position of the first time range, and an end position of the second time range is determined based on the second delay boundary. In some embodiments, the end position of the second time range is a time domain position corresponding to the sixth time unit. In some embodiments, the start position of the second time range is a position corresponding to the end position of the first time range or a position of a next slot of the end position of the first time range.

In some embodiments, the first terminal device receives a second information transmitted by the second terminal device.

The second information is configured to indicate that the second terminal device does not detect the CSI-RS; or, the second information is configured to indicate that the second terminal device detects that the measurement results corresponding to the CSI-RSs are all lower than the first threshold value; or, the second information is configured to instruct that the first terminal device retransmits the M CSI-RSs.

In some embodiments, the first terminal device retransmits the M CSI-RSs to the second terminal device through the spatial domain transmission filter, respectively.

In some embodiments, the first terminal device receives the second information transmitted by the second terminal device at a third time unit, where the third time unit is located after a fourth time unit determined based on the first delay boundary.

In summary, the first terminal device and the second terminal device interact with at least one of the transmitting configuration, the receiving configuration, and the report or feedback configuration of the CSI-RS resources, such that the second terminal device may measure and report the CSI-RS resources based on the above configuration, and the first terminal device may determine a target CSI-RS resource based on the report quantity; the transmission beam corresponding to the target CSI-RS resource may be considered as the target transmission beam, thereby realizing the selection of the optimal transmission beam in the sidelink transmission system. Further, the transmitting end terminal may carry out sidelink transmission based on the optimal transmission beam, and correspondingly, the receiving end terminal carries out sidelink reception based on the receiving beam corresponding to the optimal transmission beam, which is conducive to improving the sidelink transmission performance.

In some embodiments, a specific process of determining the spatial domain transmission filter for the first terminal device may be as shown in FIG. 24, which may include the following S10 to S16.

S10: interacting, by the first terminal device, with the second terminal device with a first sidelink configuration information.

S11: transmitting, by the first terminal device, a first indication information to the second terminal device.

S12: transmitting, by the first terminal device, M CSI-RSs respectively through a spatial domain transmission filter.

For example, the first terminal device transmits the M CSI-RSs resources through M spatial domain transmission filters, and different spatial domain transmission filters correspond to different CSI-RS resources; when the second terminal device feeds back the corresponding CSI-RS resource information, the first terminal device can determine the spatial domain transmission filters applicable to the first terminal device according to a correspondence between the spatial domain transmission filters and the CSI-RS resources.

S13: performing, by the second terminal device, measurements, such as measuring RSRP or SINR, on the CSI-RSs transmitted by the first terminal device, and selecting N CSI-RS resources with optimal measurement results.

S14: feeding back, by the second terminal device, to the first terminal device an information about the optimal N CSI-RS resources and corresponding measurement results.

S15: obtaining, by the first terminal device, CSI-RS resource indexes and RSRP measurement results transmitted by the second terminal device, selecting a CSI-RS resource, and determining the spatial domain transmission filter information corresponding to the CSI-RS resource. In some embodiments, the first terminal device selects a CSI-RS resource corresponding to the optimal measurement result.

S16: applying, by the first terminal device, the selected CSI-RS, determining the spatial domain transmission filter information corresponding to the CSI-RS, and performing a sidelink transmission through the spatial domain transmission filter.

In this way, in the embodiments of the present disclosure, it is possible to select an optimal spatial domain transmission filter between the first terminal device and the second terminal device.

Further, the first terminal device and the second terminal device obtain the number of CSI-RS resources to be fed back through information interaction or from a network configuration information or a pre-configuration information, and when the number of CSI-RS resources detected by the second terminal device is less than the number of CSI-RS resources to be fed back, the second terminal device transmits an indication information to the first terminal device indicating the number of CSI-RS resources actually fed back by the second terminal device.

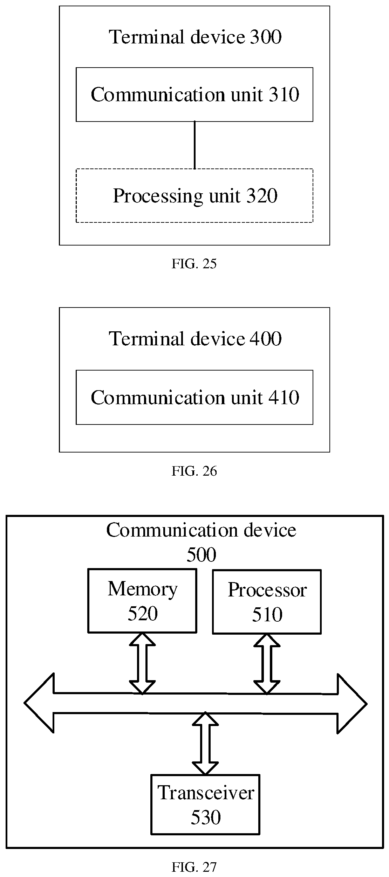

The method embodiments of the present disclosure are described in detail above in conjunction with FIGS. 13 to 24, and device embodiments of the present disclosure are described in detail below in conjunction with FIGS. 25 to 26, and it should be understood that the device embodiments and the method embodiments correspond to each other, and similar descriptions may be referred to the method embodiments.

FIG. 25 is a schematic block view of a terminal device 300 according to some embodiments of the present disclosure. The terminal device 300 is a first terminal device which, as shown in FIG. 25, includes:

a communication unit 310, configured to transmitting M channel state information reference signals (CSI-RSs) to a second terminal device through a spatial domain transmission filter; where the M CSI-RSs are configured to select a target spatial domain transmission filter;

where the M CSI-RSs correspond to multiple CSI-RS resources in a target CSI-RS resource set, and M is a positive integer.

In some embodiments, a corresponding repetition field in a configuration information of the target CSI-RS resource set has a first value;

where the first value is configured to indicate that the first terminal device transmits the multiple CSI-RS resources in the target CSI-RS resource set not through a same spatial domain transmission filter.

In some embodiments, the communication unit 310 is further configured to transmit a first sidelink configuration information to the second terminal device;

where the first sidelink configuration information includes at least one of the following:

an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, a first delay boundary, a value of a repetition field corresponding to the target CSI-RS resource set;

where the repetition field corresponding to the target CSI-RS resource set has a first value for indicating that the first terminal device transmits the CSI-RSs not through a same spatial domain transmission filter, and the repetition field corresponding to the target CSI-RS resource set has a second value for indicating that the first terminal device transmits the CSI-RSs through a same spatial domain transmission filter.

In some embodiments, within the first delay boundary, the first terminal device does not expect the second terminal device to perform a report or feedback regarding the CSI-RSs; and/or, after exceeding the first delay boundary, the second terminal device is allowed to perform a report or feedback regarding the CSI-RSs; and/or, after exceeding the first delay boundary, the second terminal device does not expect the first terminal device to transmit the CSI-RSs; and/or, after exceeding the first delay boundary, the second terminal device stops receiving the CSI-RSs transmitted by the first terminal device.

In some embodiments, the communication unit 310 is further configured to transmit a first indication information to the second terminal device;

where the first indication information is configured to indicate at least one of the following:

the first terminal device transmits the CSI-RSs for selecting a target spatial domain transmission filter; the first terminal device transmits the CSI-RSs through different spatial domain transmission filters; CSI report quantity

In some embodiments, the communication unit 310 is further configured to transmit a second indication information to the second terminal device;

where the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a channel state information.

In some embodiments, the terminal device 300 further includes: a processing unit 320;

where the processing unit 320 is configured to determine the target CSI-RS resource set according to a first CSI-RS resource set included in a resource pool configuration information or a sidelink bandwidth part (BWP) configuration information;

the processing unit 320 is further configured to determine the CSI-RS resources included in the target CSI-RS resource set according to CSI-RS resources included in the first CSI-RS resource set.

In some embodiments, the CSI report quantity includes at least one of the following:

CSI-RS resource indicator (CRI), CRI and reference signal receiving power (RSRP), CRI and receiving signal strength indication (SINR), slot resource indication (SRI), SRI and RSRP, SRI and SINR, and None.

In some embodiments, the first sidelink configuration information is carried through one of the following:

sidelink control information (SCI), media access control control element (MAC CE), PC5-radio resource control (RRC) signaling.

In some embodiments, the first indication information is carried through one of the following:

PC5-RRC signaling, SCI, MAC CE, sidelink feedback information.

In some embodiments, the second indication information is carried through one of the following:

PC5-RRC signaling, SCI, MAC CE, sidelink feedback information.

In some embodiments, activation of sidelink feedback is indicated in the SCI to which the first information is associated.

In some embodiments, when the first terminal device transmits a CSI-RS to the second terminal device through the spatial domain transmission filter, the communication unit 310 is further configured to carry a CSI-RS resource indication information corresponding to the CSI-RS in the SCI associated with the CSI-RS.

In some embodiments, the CSI-RS resource indication information corresponding to the CSI-RS includes an index of a CSI-RS resource set corresponding to the CSI-RS and/or an index of the CSI-RS resource.

In some embodiments, the communication unit 310 is further configured to receive a first information transmitted by the second terminal device;

where the first information includes a target CSI report quantity, the target CSI report quantity including at least one of:

CSI-RS resource indicator (CRI), CRI and reference signal receiving power (RSRP), CRI and signal to interference plus noise ratio (SINR), slot resource indication (SRI), SRI and RSRP, SRI and SINR;

the slot resource indication information is configured to determine a slot corresponding to a CSI-RS transmitted by the first terminal device, or the slot resource indication information is configured to determine an index corresponding to a CSI-RS resource transmitted by the first terminal device.

In some embodiments, the first information includes indexes of N CSI-RS resources, or, the first information is configured to determine indexes of N CSI-RS resources; the N CSI-RS resources are determined by the second terminal device according to measurement results obtained by performing a measurement on received CSI-RSs, and N is a number of CSI-RS resources to be reported or fed back by the second terminal device; where N is a positive integer, and $N \leq M$.

In some embodiments, the indexes of the N CSI-RS resources are arranged in an order of the measurement results corresponding to the N CSI-RS resources from high to low, or, the indexes of the N CSI-RS resources are arranged in an order of the measurement results corresponding to the N CSI-RS resources from low to high.

In some embodiments, the first information further includes a first measurement information for indicating the measurement results corresponding to the N CSI-RS resources.

In some embodiments, the measurement results corresponding to the N CSI-RS resources are each greater than or equal to a first threshold value.

In some embodiments, the N CSI-RS resources correspond to first N CSI-RSs of the CSI-RSs received by the second terminal device in an order of measurement results from high to low.

In some embodiments, the N CSI-RS resources include N1 first-class CSI-RS resources and N2 second-class CSI-RS resources;

where the N1 first-class CSI-RS resources correspond to CSI-RSs received by the second terminal device, or the N1 first-class CSI-RS resources correspond to CSI-RSs received by the second terminal device and with measurement results that are each greater than or equal to the first threshold value; indexes corresponding to the N2 second-class CSI-RS resources are determined by at least one CSI-RS resource of the N1 first-class CSI-RS resources, or indexes corresponding to the N2 second-class CSI-RS resources are determined by at least one CSI-RS resource of the multiple CSI-RS resources other than the N1 first-class CSI-RS resources, and the measurement results corresponding to the N2 second-class CSI-RS resources are each a default value; where N1 and N2 are positive integers, and N1+N2=N.

In some embodiments, the first measurement information includes a quantized index information of the measurement result corresponding to each of the N CSI-RS resources.

In some embodiments, the first measurement information includes a quantized index information of a first measurement result and N-1 differential quantized index information, where the first measurement result corresponds to a highest value among the measurement results corresponding to the N CSI-RS resources.

In some embodiments, the first information includes indexes of N3 CSI-RS resources, where the N3 CSI-RS resources are determined by the second terminal device according to the measurement results of the received CSI-RSs, N3 < N; N is a number of CSI-RS resources to be fed back or reported by the second terminal device, N3 and N are each a positive integer, and $N \leq M$.

In some embodiments, the N3 CSI-RS resources correspond to CSI-RSs received by the second terminal device, or, the N3 CSI-RS resources correspond to CSI-RSs received by the second terminal device and having corresponding measurement results each greater than or equal to the first threshold value.

In some embodiments, the indexes of the N3 CSI-RS resources are in an order of the corresponding measurement results of the N3 CSI-RS resources from high to low, or, the indexes of the N3 CSI-RS resources are in an order of the corresponding measurement results of the N3 CSI-RS resources from low to high.

In some embodiments, the first information further includes a second measurement information configured to indicate the measurement results corresponding to the N3 CSI-RS resources.

In some embodiments, the second measurement information includes a quantized index information for the measurement result corresponding to each of the N3 CSI-RS resources.

In some embodiments, the second measurement information includes a quantized index information of a second measurement result and N3-1 differential quantized index information; where the second measurement result corresponds to a highest value among the measurement results corresponding to the N3 CSI-RS resources.

In some embodiments, the first information further includes a third indication information configured to indicate a value of N3.

In some embodiments, the first information further includes a fourth indication information configured to indicate a value of N; or, configured to indicate a number of CSI-RS resources fed back from the second terminal device to the first terminal device; or, configured to indicate a number of measurement results fed back from the second terminal device to the first terminal device.

In some embodiments, the communication unit 310 is further configured to obtain a fifth indication information configured to indicate a value of N.

In some embodiments, the communication unit 310 is specifically configured to:

obtain the fifth indication information according to a pre-configured information; or, receive the fifth indication information transmitted by a network device; or, receive the fifth indication information transmitted by the second terminal device; or, receive the fifth indication information transmitted by a third terminal device, where the third terminal device is a group head terminal of a communication group in which the first terminal device and the second terminal device are located.

In some embodiments, the communication unit 310 is further configured to transmit a sixth indication information to the second terminal device, and the sixth indication information is configured to indicate a value of N.

In some embodiments, the measurement result includes a sidelink RSRP and/or a sidelink SINR.

In some embodiments, the first information is carried through one of:
SCI, MAC CE, sidelink feedback channel (PSFCH), and PC5-RRC signaling.

In some embodiments, the terminal device 300 further includes: a processing unit 320;
where the processing unit 320 is configured to select a target CSI-RS resource according to the first information, and a spatial domain transmission filter corresponding to the target CSI-RS resource is the target spatial domain transmission filter.

In some embodiments, the communication unit 310 is further configured to transmit a second sidelink configuration information to the second terminal device, and the second sidelink configuration information is configured to configure at least one transmission configuration indicator (TCI) state; where the at least one TCI state includes a first TCI state, and a reference signal included in the first TCI state is a CSI-RS corresponding to the target CSI-RS resource.

In some embodiments, a quasi-common-location (QCL) type included in the first TCI state is QCL-TypeD.

In some embodiments, the communication unit 310 is further configured to transmit a seventh indication information to the second terminal device, and the seventh indication information is configured to indicate the first TCI state.

In some embodiments, the communication unit 310 is further configured to transmit sidelink data to the second terminal device through the target spatial domain transmission filter.

In some embodiments, the communication unit 310 is specifically configured to:

receive the first information transmitted by the second terminal device at a first time unit, where the first time unit is located after a second time unit determined based on the first delay boundary.

In some embodiments, the communication unit 310 is further configured to transmit a third sidelink configuration information to the second terminal device, and the third configuration information is configured to configure a second delay boundary.

In some embodiments, the third sidelink configuration information may be the same configuration information as the first sidelink configuration information.

In some embodiments, within a time range determined according to the second delay boundary, the first terminal device expects the second terminal device to perform a report or feedback regarding the CSI-RS; and/or, outside the time range determined according to the second delay boundary, the first terminal device does not expect the second terminal device to perform a report or feedback regarding the CSI-RS.

In some embodiments, the terminal device 300 further includes: a processing unit 320;

where the processing unit 320 is configured to determine the second time unit according to a fifth time unit and the first delay boundary;

a time domain position of the fifth time unit is determined based on at least one of the following:
a time unit in which the first sidelink configuration information is located; where the first sidelink configuration information includes at least one of the following: an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which the second sidelink configuration information is located; where the second sidelink configuration information is configured to configure at least one TCI state, the at least one TCI state including a first TCI state; a reference signal included in the first TCI state is a CSI-RS corresponding to the target CSI-RS resource;
a time unit in which the first indication information is located; where the first indication information is configured to indicate at least one of the following: the first terminal device will transmit the CSI-RSs for selecting a target spatial domain transmission filter; the first terminal device will transmit the CSI-RSs through different spatial domain transmission filters; and CSI report quantity;
a time unit in which the second indication information is located; where the second indication information is configured to indicate that the CSI-RS transmitted by the first terminal device is configured to select a spatial domain transmission filter for sidelink data transmission by the first terminal device; or, the second indication information is configured to indicate that the CSI-RS transmitted by the first terminal device is configured to select a spatial domain reception filter for sidelink data reception by the second terminal device; or, the second indication information is configured to indicate that the CSI-RS transmitted by the first terminal device is configured to measure a channel state information.

In some embodiments, the communication unit is specifically configured to:
receive the first information transmitted by the second terminal device at a first time unit, where the first time unit is located before a sixth time unit determined based on the second delay boundary.
In some embodiments, the terminal device 300 further includes: a processing unit 320;

where the processing unit 320 is configured to determine the sixth time unit according to a seventh time unit and the second delay boundary;
the seventh time unit is determined based on one of the following:
a time unit in which the first sidelink configuration information is located; where the first sidelink configuration information includes at least one of the following: an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which the second sidelink configuration information is located; where the second sidelink configuration information is configured to configure at least one TCI state, the at least one TCI state including a first TCI state; a reference signal included in the first TCI state is a CSI-RS corresponding to the target CSI-RS resource;
a time unit in which the first indication information is located; where the first indication information is configured to indicate at least one of the following: the first terminal device will transmit the CSI-RSs for selecting a target spatial domain transmission filter; the first terminal device will transmit the CSI-RSs through different spatial domain transmission filters; and CSI report quantity;
a time unit in which the second indication information is located; where the second indication information is configured to indicate that the CSI-RS transmitted by the first terminal device is configured to select a spatial domain transmission filter for sidelink data transmission by the first terminal device; or, the second indication information is configured to indicate that the CSI-RS transmitted by the first terminal device is configured to select a spatial domain reception filter for sidelink data reception by the second terminal device; or, the second indication information is configured to indicate that the CSI-RS transmitted by the first terminal device is configured to measure a channel state information;
the second time unit.

In some embodiments, the first time unit is located within a time range determined according to the second time unit and the sixth time unit.
In some embodiments, the first delay boundary is represented as a first number of slots, and the second delay boundary is represented as a second number of slots.
In some embodiments, a start position of the first time range is determined based on a slot in which the first configuration information is located, and an end position of the first time range is determined based on the first delay boundary. In some embodiments, the end position of the first time range is a time domain position corresponding to the second time unit.

In some embodiments, a start position of the second time range is determined based on the end position of the first time range, and an end position of the second time range is determined based on the second delay boundary. In some embodiments, the end position of the second time range is a time domain position corresponding to the sixth time unit. In some embodiments, the start position of the second time range is a position corresponding to the end position of the first time range or a position of a next slot of the end position of the first time range.

In some embodiments, the communication unit 310 is further configured to receive a second information transmitted by the second terminal device;

where the second information is configured to indicate that the second terminal device does not detect the CSI-RS; or, the second information is configured to indicate that the second terminal device detects that the measurement results corresponding to the CSI-RSs are all lower than the first threshold value; or, the second information is configured to instruct that the first terminal device retransmits the M CSI-RSs.

In some embodiments, the communication unit 310 is further configured to retransmit the M CSI-RSs to the second terminal device through the spatial domain transmission filter, respectively.

In some embodiments, the communication unit 310 is specifically configured to:

receive the second information transmitted by the second terminal device at a third time unit, where the third time unit is located after a fourth time unit determined based on the first delay boundary.

In some embodiments, the first threshold value is pre-configured or protocol-agreed; or, the first threshold value is configured by a network device; or, the first threshold value is configured by the first terminal device.

In some embodiments, the communication unit may be a communication interface or transceiver, or an input/output interface of a communication chip or a system-on-chip. The processing unit described above may be one or more processors.

It should be understood that the terminal device 300 according to the embodiments of the present disclosure may correspond to the first terminal device in the method embodiments of the present disclosure, and that the above and other operations and/or functions of the various units in the terminal device 300 are for the purpose of realizing the corresponding processes of the first terminal device in the method 200 illustrated in FIG. 13, respectively, and will not be further elaborated herein for the sake of brevity.

FIG. 26 is a schematic block view of another terminal device 400 according to some embodiments of the present disclosure. The terminal device 400 is a second terminal device, and as shown in FIG. 26, the terminal device 400 includes: a communication unit 410, configured to receive M channel state information reference signals (CSI-RSs) transmitted by a first terminal device through a spatial domain transmission filter; where the M CSI-RSs are configured to select a target spatial domain transmission filter; the M CSI-RSs correspond to multiple CSI-RS resources in a target CSI-RS resource set, and M is a positive integer.

In some embodiments, a corresponding repetition field in a configuration information of the target CSI-RS resource set has a first value;

where the first value is configured to indicate that the first terminal device transmits the multiple CSI-RS resources in the target CSI-RS resource set not through a same spatial domain transmission filter.

In some embodiments, the communication unit 410 is further configured to receive a first sidelink configuration information transmitted by the first terminal device;

where the first sidelink configuration information includes at least one of the following:
an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, a first delay boundary, a value of a repetition field corresponding to the target CSI-RS resource set;
where the repetition field corresponding to the target CSI-RS resource set has a first value for indicating that the first terminal device transmits the CSI-RSs not through a same spatial domain transmission filter, and the repetition field corresponding to the target CSI-RS resource set has a second value for indicating that the first terminal device transmits the CSI-RSs through a same spatial domain transmission filter.

In some embodiments, within the first delay boundary, the first terminal device does not expect the second terminal device to perform a report or feedback regarding the CSI-RSs; and/or, after exceeding the first delay boundary, the second terminal device is allowed to perform a report or feedback regarding the CSI-RSs; and/or, after exceeding the first delay boundary, the second terminal device does not expect the first terminal device to transmit the CSI-RSs; and/or, after exceeding the first delay boundary, the second terminal device stops receiving the CSI-RSs transmitted by the first terminal device.

In some embodiments, the communication unit 410 is further configured to receive a first indication information transmitted by the first terminal device;

where the first indication information is configured to indicate at least one of the following:
the first terminal device transmits the CSI-RSs for selecting a target spatial domain transmission filter; the first terminal device transmits the CSI-RSs through different spatial domain transmission filters; CSI report quantity

In some embodiments, the communication unit 410 is further configured to receive a second indication information transmitted by the first terminal device;
where the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a channel state information.

In some embodiments, the CSI report quantity includes at least one of the following:
CSI-RS resource indicator (CRI), CRI and reference signal receiving power (RSRP), CRI and receiving signal strength indication (SINR), slot resource indication (SRI), SRI and RSRP, SRI and SINR, and None.

In some embodiments, the first sidelink configuration information is carried through one of the following:
sidelink control information (SCI), media access control control element (MAC CE), PC5-radio resource control (RRC) signaling.

In some embodiments, the first indication information is carried through one of the following:
PC5-RRC signaling, SCI, MAC CE, sidelink feedback information.

In some embodiments, the second indication information is carried through one of the following:
PC5-RRC signaling, SCI, MAC CE, sidelink feedback information.

In some embodiments, when the first terminal device transmits a CSI-RS to the second terminal device through the spatial domain transmission filter, the communication unit 410 is further configured to receive a CSI-RS resource indication information corresponding to the CSI-RS carried by the first terminal device in the SCI associated with the CSI-RS.

In some embodiments, the CSI-RS resource indication information corresponding to that CSI-RS includes an index of a CSI-RS resource set corresponding to the CSI-RS and/or an index of that CSI-RS resource.

In some embodiments, the communication unit 410 is further configured to transmit a first information to the first terminal device;
where the first information includes a target CSI report quantity, the target CSI report quantity including at least one of:

CSI-RS resource indicator (CRI), CRI and reference signal receiving power (RSRP), CRI and signal to interference plus noise ratio (SINR), slot resource indication (SRI), SRI and RSRP, SRI and SINR;
the slot resource indication information is configured to determine a slot corresponding to a CSI-RS transmitted by the first terminal device, or the slot resource indication information is configured to determine an index corresponding to a CSI-RS resource transmitted by the first terminal device.

In some embodiments, the first information includes indexes of N CSI-RS resources, or, the first information is configured to determine indexes of N CSI-RS resources; the N CSI-RS resources are determined by the second terminal device according to measurement results obtained by performing a measurement on received CSI-RSs, and N is a number of CSI-RS resources to be reported or fed back by the second terminal device; where N is a positive integer, and $N \le M$.

In some embodiments, the indexes of the N CSI-RS resources are arranged in an order of the measurement results corresponding to the N CSI-RS resources from high to low, or, the indexes of the N CSI-RS resources are arranged in an order of the measurement results corresponding to the N CSI-RS resources from low to high.

In some embodiments, the first information further includes a first measurement information for indicating the measurement results corresponding to the N CSI-RS resources.

In some embodiments, the measurement results corresponding to the N CSI-RS resources are each greater than or equal to a first threshold value.

In some embodiments, the N CSI-RS resources correspond to first N CSI-RSs of the CSI-RSs received by the second terminal device in an order of measurement results from high to low.

In some embodiments, the N CSI-RS resources include N1 first-class CSI-RS resources and N2 second-class CSI-RS resources;
where the N1 first-class CSI-RS resources correspond to CSI-RSs received by the second terminal device, or the N1 first-class CSI-RS resources correspond to CSI-RSs received by the second terminal device and with measurement results that are each greater than or equal to the first threshold value; indexes corresponding to the N2 second-class CSI-RS resources are determined by at least one CSI-RS resource of the N1 first-class CSI-RS resources, or indexes corresponding to the N2 second-class CSI-RS resources are determined by at least one CSI-RS resource of the multiple CSI-RS resources other than the N1 first-class CSI-RS resources, and the measurement results corresponding to the N2 second-class CSI-RS resources are each a default value; where N1 and N2 are positive integers, and N1+N2=N.

In some embodiments, the first measurement information includes a quantized index information of the measurement result corresponding to each of the N CSI-RS resources.

In some embodiments, the first measurement information includes a quantized index information of a first measurement result and N-1 differential quantized index information, where the first measurement result corresponds to a highest value among the measurement results corresponding to the N CSI-RS resources.

In some embodiments, the first information includes indexes of N3 CSI-RS resources, where the N3 CSI-RS resources are determined by the second terminal device according to the measurement results of the received CSI-RSs, N3 < N; N is a number of CSI-RS resources to be fed back or reported by the second terminal device, N3 and N are each a positive integer, and N≤M.

In some embodiments, the N3 CSI-RS resources correspond to CSI-RSs received by that second terminal device, or, the N3 CSI-RS resources correspond to CSI-RSs received by the second terminal device and having corresponding measurement results each greater than or equal to the first threshold value.

In some embodiments, the indexes of the N3 CSI-RS resources are in an order of the corresponding measurement results of the N3 CSI-RS resources from high to low, or, the indexes of the N3 CSI-RS resources are in an order of the corresponding measurement results of the N3 CSI-RS resources from low to high.

In some embodiments, the first information further includes a second measurement information configured to indicate the measurement results corresponding to the N3 CSI-RS resources.

In some embodiments, the second measurement information includes a quantized index information for the measurement result corresponding to each of the N3 CSI-RS resources.

In some embodiments, the second measurement information includes a quantized index information of a second measurement result and N3-1 differential quantized index information; where the second measurement result corresponds to a highest value among the measurement results corresponding to the N3 CSI-RS resources.

In some embodiments, the first information further includes a third indication information configured to indicate a value of N3.

In some embodiments, the first information further includes a fourth indication information configured to indicate a value of N; or, configured to indicate a number of CSI-RS resources fed back from the second terminal device to the first terminal device; or, configured to indicate a number of measurement results fed back from the second terminal device to the first terminal device.

In some embodiments, the communication unit 410 is further configured to obtain a sixth indication information, and the sixth indication information is configured to indicate a value of N.

In some embodiments, the communication unit 410 is specifically configured to:

obtain the sixth indication information according to a pre-configured information; or, receive the sixth indication information transmitted by a network device; or, receive the sixth indication information transmitted by the first terminal device; or, receive the sixth indication information transmitted by a third terminal device, where the third terminal device is a group head terminal of a communication group in which the first terminal device and the second terminal device are located.

In some embodiments, the measurement result includes a sidelink RSRP and/or a sidelink SINR.

In some embodiments, the first information is carried through one of:

SCI, MAC CE, sidelink feedback channel PSFCH, and PC5-RRC signaling.

In some embodiments, activation of sidelink feedback is indicated in the SCI to which the first information is associated.

In some embodiments, the communication unit 410 is further configured to receive a second sidelink configuration information transmitted by the first terminal device, and the second sidelink configuration information is configured to configure at least one transmission configuration indicator (TCI) state; where the at least one TCI state includes a first TCI state, and a reference signal included in the first TCI state is a CSI-RS corresponding to the target CSI-RS resource; the target CSI-RS resource is determined based on the first information, and a spatial domain transmission filter corresponding to the target CSI-RS resource is the target spatial domain transmission filter.

In some embodiments, a quasi-common-location (QCL) type included in the first TCI state is QCL-TypeD.

In some embodiments, the communication unit 410 is further configured to receive a seventh indication information transmitted by the first terminal device, and the seventh indication information is configured to indicate the first TCI state.

In some embodiments, the communication unit 410 is further configured to receive sidelink data transmitted by the first terminal device through the target spatial domain transmission filter.

In some embodiments, a first time unit for the first terminal device to receive the first information is located after a second time unit determined based on the first delay boundary.

In some embodiments, the communication unit 410 is further configured to receive a third sidelink configuration information transmitted by the first terminal device, and the third configuration information is configured to configure a second delay boundary.

In some embodiments, the third sidelink configuration information may be the same configuration information as the first sidelink configuration information.

In some embodiments, within a time range determined according to the second delay boundary, the first terminal device expects the second terminal device to perform a report or feedback regarding the CSI-RS; and/or, outside the time range determined according to the second delay boundary, the first terminal device does not expect the second terminal device to perform a report or feedback regarding the CSI-RS.

In some embodiments, the second time unit is determined based on a fifth time unit and the first delay boundary;

where a time domain position of the fifth time unit is determined based on at least one of the following:
a time unit in which the first sidelink configuration information is located; where the first sidelink configuration information includes at least one of the following: an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which the second sidelink configuration information is located; where the second sidelink configuration information is configured to configure at least one TCI state, the at least one TCI state including a first TCI state; a reference signal included in the first TCI state is a CSI-RS corresponding to the target CSI-RS resource;
a time unit in which the first indication information is located; where the first indication information is configured to indicate at least one of the following: the first terminal device will transmit the CSI-RSs for selecting a target spatial domain transmission filter; the first terminal device will transmit the CSI-RSs through different spatial domain transmission filters; and CSI report quantity;
a time unit in which the second indication information is located; where the second indication information is configured to indicate that the CSI-RS transmitted by the first terminal device is configured to select a spatial domain transmission filter for sidelink data transmission by the first terminal device; or, the second indication information is configured to indicate that the CSI-RS transmitted by the first terminal device is configured to select a spatial domain reception filter for sidelink data reception by the second terminal device; or, the second indication information is configured to indicate that the CSI-RS transmitted by the first terminal device is configured to measure a channel state information.

In some embodiments, a first time unit for the first terminal device to receive the first information is located before a sixth time unit determined based on the second delay boundary.

In some embodiments, the sixth time unit is determined based on a seventh time unit and the second delay boundary;

where the seventh time unit is determined based on one of the following:
a time unit in which the first sidelink configuration information is located; where the first sidelink configuration information includes at least one of the following: an index of the target CSI-RS resource set, indexes of the multiple CSI-RS resources included in the target CSI-RS resource set, a number of the multiple CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which the second sidelink configuration information is located; where the second sidelink configuration information is configured to configure at least one TCI state, the at least one TCI state including a first TCI state; a reference signal included in the first TCI state is a CSI-RS corresponding to the target CSI-RS resource;
a time unit in which the first indication information is located; where the first indication information is configured to indicate at least one of the following: the first terminal device will transmit the CSI-RSs for selecting a target spatial domain transmission filter; the first terminal device will transmit the CSI-RSs through different spatial domain transmission filters; and CSI report quantity;
a time unit in which the second indication information is located; where the second indication information is configured to indicate that the CSI-RS transmitted by the first terminal device is configured to select a spatial domain transmission filter for sidelink data transmission by the first terminal device; or, the second indication information is configured to indicate that the CSI-RS transmitted by the first terminal device is configured to select a spatial domain reception filter for sidelink data reception by the second terminal device; or, the second indication information is configured to indicate that the CSI-RS transmitted by the first terminal device is configured to measure a channel state information;

the second time unit.

In some embodiments, the seventh time unit may be the second time unit.

In some embodiments, the first time unit is located within a time range determined according to the second time unit and the sixth time unit.

In some embodiments, the first delay boundary is represented as a first number of slots, and the second delay boundary is represented as a second number of slots.

In some embodiments, a start position of the first time range is determined based on a slot in which the first configuration information is located, and an end position of the first time range is determined based on the first delay boundary. In some embodiments, the end position of the first time range is a time domain position corresponding to the second time unit.

In some embodiments, a start position of the second time range is determined based on the end position of the first time range, and an end position of the second time range is determined based on the second delay boundary. In some embodiments, the end position of the second time range is a time domain position corresponding to the sixth time unit. In some embodiments, the start position of the second time range is a position corresponding to the end position of the first time range or a position of a next slot of the end position of the first time range.

In some embodiments, the communication unit 410 is configured to transmit a second information to the first terminal device;

where the second information is configured to indicate that the second terminal device does not detect the CSI-RS; or, the second information is configured to indicate that the second terminal device detects that the measurement results corresponding to the CSI-RSs are all lower than the first threshold value; or, the second information is configured to instruct that the first terminal device retransmits the M CSI-RSs.

In some embodiments, the communication unit 410 is further configured to receive the M CSI-RSs resent by the first terminal device through the spatial domain transmission filter, respectively.

In some embodiments, the first threshold value is pre-configured or protocol-agreed; or, the first threshold value is configured by a network device; or, the first threshold value is configured by the first terminal device.

In some embodiments, the communication unit may be a communication interface or transceiver, or an input/output interface of a communication chip or a system-on-chip. The processing unit described above may be one or more processors.

It should be understood that the terminal device 400 according to the embodiments of the present disclosure may correspond to the second terminal device in the method embodiments of the present disclosure, and that the above and other operations and/or functions of the various units in the terminal device 400 are for the purpose of realizing the corresponding processes of the second terminal device in the method 200 shown in FIG. 13, respectively, and will not be further elaborated herein for the sake of brevity.

FIG. 27 is a schematic block view of a communication device 500 according to some embodiments of the present disclosure. The communication device 500 shown in FIG. 27 includes a processor 510, and the processor 510 may call and run a computer program from memory to implement the method in the embodiments of the present disclosure.

In some embodiments, as shown in FIG. 27, the communication device 500 may further include a memory 520. The processor 510 may call and run a computer program from the memory 520 to implement the methods in the embodiments of the present disclosure.

The memory 520 may be a separate device from the processor 510 or may be integrated into the processor 510.

In some embodiments, as shown in FIG. 27, the communication device 500 may further include a transceiver 530, which the processor 510 may control to communicate with other devices, specifically, to transmit information or data to other devices or to receive information or data from other devices.

The transceiver 530 may include a transmitter and a receiver. The transceiver 530 may further include an antenna, and the number of the antenna may be one or more.

In some embodiments, the communication device 500 may specifically be a terminal device of the embodiments of the present disclosure, and the communication device 500 may realize the corresponding processes realized by the first terminal device in the various methods of the embodiments of the present disclosure, which will not be repeated herein for brevity.

In some embodiments, the communication device 500 may specifically be a terminal device of the embodiments of the present disclosure, and the communication device 500 may realize the corresponding process realized by the second terminal device in the various methods of the embodiments of the present disclosure, which will not be repeated herein for brevity.

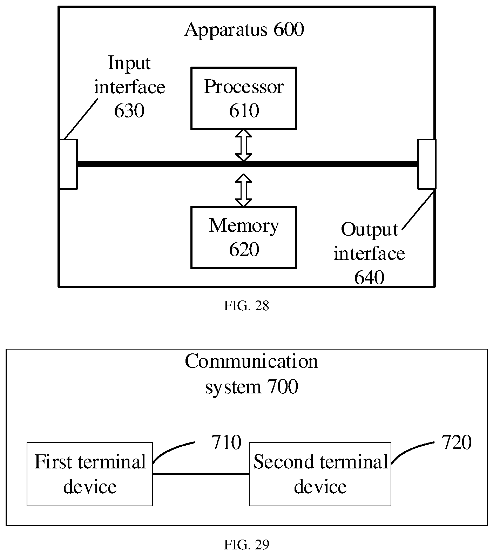

FIG. 28 is a schematic block view of an apparatus according to some embodiments of the present disclosure. The apparatus 600 shown in FIG. 28 includes a processor 610, which may call and run a computer program from memory to implement the methods of the embodiments of the present disclosure.

In some embodiments, as shown in FIG. 28, the apparatus 600 may further include a memory 620. The processor 610 may call and run the computer program from the memory 620 to implement the method in the embodiments of the present disclosure.

The memory 620 may be a separate device from the processor 610 or may be integrated into the processor 610.

In some embodiments, the apparatus 600 may further include an input interface 630. The processor 610 may control the input interface 630 to communicate with other devices or chips, specifically, to obtain information or data transmitted by other devices or chips.

In some embodiments, the apparatus 600 may further include an output interface 640. The processor 610 may control the output interface 640 to communicate with other devices or chips, specifically, to output information or data to the other devices or chips.

In some embodiments, the apparatus may be applied to the terminal device in the embodiments of the present disclosure, and the apparatus may realize the corresponding processes realized by the first terminal device in the various methods of the embodiments of the present disclosure, which are not repeated herein for brevity.

In some embodiments, the apparatus may be applied to the terminal device in the embodiments of the present disclosure, and the apparatus may realize the corresponding processes realized by the second terminal device in the various methods of the embodiments of the present disclosure, which are not repeated herein for brevity.

In some embodiments, the apparatus referred to in the embodiments of the present disclosure may be a chip. For example, it may be a system-level chip, a system-on-chip, a chip system, or a SOC chip, etc.

FIG. 29 is a schematic block view of a communication system 700 according to some embodiments of the present disclosure. As shown in FIG. 29, the communication system 700 includes a first terminal device 710 and a second terminal device 720.

The first terminal device 710 may be configured to realize corresponding functions realized by the first terminal device in the above-described methods, and the second terminal device 720 may be configured to realize corresponding functions realized by the second terminal device in the above-described methods, which will not be repeated herein for the sake of brevity.

It should be understood that the processor of the embodiments of the present disclosure may be an integrated circuit chip with signal processing capability. During realization, the steps of the above method embodiments may be accomplished by integrated logic circuits of hardware in the processor or by instructions in the form of software. The processor may be a general-purpose processor, a digital signal processor (DSP), an application specific integrated circuit (ASIC), a field programmable gate array (FPGA), or other programmable logic device, discrete gate or transistor logic device, and discrete hardware components, such that various methods, steps, and logic block diagrams in the embodiments of the present disclosure may be implemented or performed. The general-purpose processor may be a microprocessor or the processor may be any conventional processor, etc. The steps of the methods disclosed in conjunction with the embodiments of the present disclosure may be directly embodied as being performed by a hardware decoding processor, or performed with a combination of hardware and software modules in a decoding processor. The software module may be located in a random memory, a flash memory, a read-only memory, a programmable read-only memory, or an electrically erasable programmable memory, a register, or other storage medium well established in the art. The storage medium is located in a memory, and the processor reads the information in the memory and completes the steps of the method described above in combination with its hardware.

It will be appreciated that the memory in the embodiments of the present disclosure may be a volatile memory or a non-volatile memory, or may include both volatile and non-volatile memories. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM), which is used as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), and direct Rambus RAM (DRAM). It should be noted that the memory of the systems and methods described herein is intended to include, but is not limited to, these and any other suitable types of memory.

It should be understood that the above memories are exemplary but not limiting descriptions, for example, the memory in embodiments of the present disclosure may be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), and direct Rambus RAM (DRAM), etc. That is, the memory in the embodiments of the present disclosure is intended to include, but is not limited to, these and any other suitable types of memory.

The embodiments of the present disclosure further provide a computer-readable storage medium for storing a computer program.

In some embodiments, the computer-readable storage medium may be applied to the terminal device in the embodiments of the present disclosure, and the computer program causes the computer to perform the corresponding processes implemented by the first terminal device in the various methods of the embodiments of the present disclosure, which will not be repeated herein for brevity.

In some embodiments, the computer-readable storage medium may be applied to the terminal device in the embodiments of the present disclosure, and the computer program causes the computer to perform the corresponding processes realized by the second terminal device in the various methods of the embodiments of the present disclosure, which will not be repeated herein for brevity.

The embodiments of the present disclosure further provide a computer program product including computer program instructions.

In some embodiments, the computer program product may be applied to the terminal device in the embodiments of the present disclosure, and the computer program instructions cause the computer to perform the corresponding processes realized by the first terminal device in the respective methods of the embodiments of the present disclosure, which are not repeated herein for brevity.

In some embodiments, the computer program product may be applied to the terminal device in the embodiments of the present disclosure, and the computer program instructions cause the computer to perform the corresponding processes realized by the second terminal device in the respective methods of the embodiments of the present disclosure, which are not repeated herein for brevity.

The embodiments of the present disclosure further provide a computer program.

In some embodiments, the computer program may be applied to the terminal device in the embodiments of the present disclosure, and when the computer program is run on the computer, the computer is caused to execute the corresponding processes realized by the first terminal device in the respective methods of the embodiments of the present disclosure, which are not repeated herein for brevity.

In some embodiments, the computer program may be applied to the terminal device in the embodiments of the present disclosure, and when the computer program is run on the computer, cause the computer to execute the corresponding processes realized by the second terminal device in the respective methods of the embodiments of the present disclosure, which are not repeated herein for brevity.

Those skilled in the art may realize that the units and algorithmic steps described in conjunction with the various examples of embodiments disclosed herein are capable of being implemented in electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of the present disclosure.

It is clear to those skilled in the art that, for the convenience and brevity of the description, the specific working processes of the above-described systems, apparatuses, and units can be referred to the corresponding processes in the foregoing embodiments of the methods, which will not be repeated herein.

In the several embodiments provided in the present disclosure, it should be understood that the systems, apparatuses, and methods disclosed, may be realized in other ways. For example, the embodiments of the apparatuses are merely schematic, e.g., the division of the units, which is merely a logical functional division, may be divided in other ways when actually implemented, e.g., multiple units or components may be combined or may be integrated into another system, or some features may be ignored, or not implemented. At another point, the coupling or direct coupling or communication connection between each other shown or discussed may be an indirect coupling or communication connection through some interface, apparatus or unit, which may be electrical, mechanical or otherwise.

The units illustrated as separated components may or may not be physically separated, and components shown as units may or may not be physical units, i.e., they may be located in a single place or may be distributed over multiple network units. Some or all of these units may be selected to fulfill the purpose of the scheme embodiments according to actual needs.

In addition, the functional units in various embodiments of the present disclosure may be integrated in a single processing unit, or each unit may be physically present separately, or two or more units may be integrated in a single unit.

The functions may be stored in a computer-readable storage medium when implemented as a software functional unit and sold or used as a separate product. With the understanding, the essential technical solution of the present disclosure, or to say, a part of the solution that contributes to the prior art, or a part of the technical solution may be embodied in the form of a software product, which is stored in a storage medium and includes a number of instructions to cause a computer device (which may be a personal computer, a server, or a network device, etc.) to carry out all or part of the steps of the method described in the various embodiments of the present disclosure. The storage medium includes a USB flash drive, a removable hard disk, a read-only memory (ROM), a random-access memory (RAM), a diskette or a CD-ROM, and other media that can store program code.

The foregoing is only a specific implementation of the present disclosure, but the scope of the present disclosure is not limited thereto, and those skilled in the art can easily think of changes or substitutions within the scope of the technology disclosed in the present disclosure, all of which should be covered by the scope of the present disclosure. Therefore, the scope of the present disclosure shall be stated to be subject to the scope of the claims.

**Claims**

1. A wireless communication method, **characterized by** comprising:

    transmitting, by a first terminal device, M channel state information reference signals (CSI-RSs) to a second terminal device through a spatial domain transmission filter; wherein the M CSI-RSs are configured to select a target spatial domain transmission filter;
    wherein the M CSI-RSs correspond to a plurality of CSI-RS resources in a target CSI-RS resource set, and M is a positive integer.

2. The method according to claim 1, wherein a corresponding repetition field in a configuration information of the target CSI-RS resource set has a first value;
    the first value is configured to indicate that the first terminal device transmits the plurality of CSI-RS resources in the target CSI-RS resource set not through a same spatial domain transmission filter.

3. The method according to claim 1 or 2, further comprising:

    transmitting, by the first terminal device, a first sidelink configuration information to the second terminal device;
    wherein the first sidelink configuration information comprises at least one of:

    an index of the target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, a first delay boundary, a value of a repetition field corresponding to the target CSI-RS resource set;
    wherein the repetition field corresponding to the target CSI-RS resource set indicates that the first terminal device transmits the CSI-RSs not through a same spatial domain transmission filter in response to having a first value, and the repetition field corresponding to the target CSI-RS resource set indicates that the first terminal device transmits the CSI-RSs through a same spatial domain transmission filter in response to having a second value.

4. The method according to claim 3, wherein,
    within the first delay boundary, the first terminal device does not expect the second terminal device to perform a report or feedback regarding CSI-RS; and/or, after exceeding the first delay boundary, the second terminal device is allowed to perform a report or feedback regarding CSI-RS; and/or, after exceeding the first delay boundary, the second terminal device does not expect the first terminal device to transmit CSI-RS; and/or, after exceeding the first delay boundary, the second terminal device stops receiving CSI-RS transmitted by the first terminal device.

5. The method according to any one of claims 1-4, further comprising:

    transmitting, by the first terminal device, a first indication information to the second terminal device;
    wherein the first indication information is configured to indicate at least one of:
    that the first terminal device will transmit CSI-RSs for selecting the target spatial domain transmission filter; that the first terminal device will transmit CSI-RSs through different spatial domain transmission filters; and a CSI report quantity.

6. The method according to any one of claims 1-5, further comprising:

    transmitting, by the first terminal device, a second indication information to the second terminal device;
    wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI.

7. The method according to any one of claims 3-6, further comprising:

determining, by the first terminal device, the target CSI-RS resource set according to a first CSI-RS resource set included in a resource pool configuration information or a sidelink bandwidth part (BWP) configuration information; and
determining, by the first terminal device, the plurality of CSI-RS resources included in the target CSI-RS resource set according to CSI-RS resources included in the first CSI-RS resource set.

8. The method according to any one of claims 3-7, wherein the CSI report quantity comprises at least one of:
CSI-RS resource indicator (CRI), CRI and reference signal receiving power (RSRP), CRI and receiving signal strength indication (SINR), slot resource indication (SRI), SRI and RSRP, SRI and SINR, and None.

9. The method according to claim 3, wherein the first sidelink configuration information is carried through one of the following:
sidelink control information (SCI), media access control control element (MAC CE), and PC5-radio resource control (RRC) signaling.

10. The method according to claim 5, wherein the first indication information is carried through one of the following:
PC5-radio resource control (RRC) signaling, sidelink control information (SCI), media access control control element (MAC CE), and sidelink feedback information.

11. The method according to claim 6, wherein the second indication information is carried through one of the following:
PC5-radio resource control (RRC) signaling, sidelink control information (SCI), media access control control element (MAC CE), and sidelink feedback information.

12. The method according to claim 1 or 2, further comprising:
in condition of the first terminal device transmitting a CSI-RS to the second terminal device through a corresponding spatial domain transmission filter, carrying, by the first terminal device, a CSI-RS resource indication information corresponding to the CSI-RS in a sidelink control information (SCI) associated with the CSI-RS.

13. The method according to claim 12, wherein the CSI-RS resource indication information corresponding to the CSI-RS comprises an index of a CSI-RS resource set corresponding to the CSI-RS and/or an index of the CSI-RS resource.

14. The method according to any one of claims 1-13, further comprising:

receiving, by the first terminal device, a first information transmitted by the second terminal device;
wherein the first information comprises a target CSI report quantity, the target CSI report quantity comprising at least one of:

CSI-RS resource indicator (CRI), CRI and reference signal receiving power (RSRP), CRI and signal to interference plus noise ratio (SINR), slot resource indication (SRI), SRI and RSRP, and SRI and SINR;
the SRI is configured to determine a slot corresponding to a CSI-RS transmitted by the first terminal device, or the SRI is configured to determine an index corresponding to a CSI-RS resource transmitted by the first terminal device.

15. The method according to claim 14, wherein,
the first information comprises or is configured to determine indexes of N CSI-RS resources; the N CSI-RS resources are determined by the second terminal device according to a measurement result obtained by performing a measurement on each of CSI-RSs received by the second terminal device, and N is a number of CSI-RS resources to be reported or fed back by the second terminal device; wherein N is a positive integer, and $N \leq M$.

16. The method according to claim 15, wherein the indexes of the N CSI-RS resources are arranged in an order of the measurement results corresponding to the N CSI-RS resources from high to low; or, the indexes of the N CSI-RS resources are arranged in an order of the measurement results corresponding to the N CSI-RS resources from low to high.

**17.** The method according to claim 15 or 16, wherein the first information further comprises a first measurement information for indicating the measurement results corresponding to the N CSI-RS resources.

**18.** The method according to claim 17, wherein the measurement results corresponding to the N CSI-RS resources are each greater than or equal to a first threshold value.

**19.** The method according to claim 17 or 18, wherein the N CSI-RS resources correspond to first N CSI-RSs of the CSI-RSs received by the second terminal device in an order of the corresponding measurement results from high to low.

**20.** The method according to any one of claims 15-17, wherein,

the N CSI-RS resources comprise N1 first-class CSI-RS resources and N2 second-class CSI-RS resources; wherein the N1 first-class CSI-RS resources correspond to CSI-RSs received by the second terminal device, or the N1 first-class CSI-RS resources correspond to CSI-RSs received by the second terminal device and with the corresponding measurement results that are each greater than or equal to a first threshold value; indexes corresponding to the N2 second-class CSI-RS resources are determined by at least one CSI-RS resource of the N1 first-class CSI-RS resources, or indexes corresponding to the N2 second-class CSI-RS resources are determined by at least one CSI-RS resource of the plurality of CSI-RS resources other than the N1 first-class CSI-RS resources, and the measurement results corresponding to the N2 second-class CSI-RS resources are each a default value; wherein N1 and N2 are each a positive integer, and N1+N2=N.

**21.** The method according to claim 17 or 18, wherein the first measurement information comprises a quantized index information of the measurement result corresponding to each of the N CSI-RS resources.

**22.** The method according to claim 17 or 18, wherein the first measurement information comprises a quantized index information of a first measurement result and N-1 differential quantized index information; the first measurement result corresponds to a highest value among the measurement results corresponding to the N CSI-RS resources.

**23.** The method according to claim 14, wherein,
the first information further comprises indexes of N3 CSI-RS resources, wherein the N3 CSI-RS resources are determined by the second terminal device according to a measurement result of each of CSI-RSs received by the second terminal device, N3 < N; N is a number of CSI-RS resources to be fed back or reported by the second terminal device, N3 and N are each a positive integer, and N≤M.

**24.** The method according to claim 23, wherein the N3 CSI-RS resources correspond to the CSI-RSs received by the second terminal device, or, the N3 CSI-RS resources correspond to the CSI-RSs received by the second terminal device and having the corresponding measurement results each greater than or equal to a first threshold value.

**25.** The method according to claim 23 or 24, wherein the indexes of the N3 CSI-RS resources are in an order of the corresponding measurement results of the N3 CSI-RS resources from high to low; or, the indexes of the N3 CSI-RS resources are in an order of the corresponding measurement results of the N3 CSI-RS resources from low to high.

**26.** The method according to any one of claims 23-25, wherein the first information further comprises a second measurement information configured to indicate the measurement results corresponding to the N3 CSI-RS resources.

**27.** The method according to claim 26, wherein the second measurement information comprises a quantized index information of the measurement result corresponding to each of the N3 CSI-RS resources.

**28.** The method according to claim 26 or 27, wherein the second measurement information comprises a quantized index information of a second measurement result and N3-1 differential quantized index information; the second measurement result corresponds to a highest value among the measurement results corresponding to the N3 CSI-RS resources.

**29.** The method according to any one of claims 23-28, wherein the first information further comprises a third indication information configured to indicate a value of N3.

30. The method according to any one of claims 14-29, wherein the first information further comprises a fourth indication information configured to indicate a value of N; or, configured to indicate a number of CSI-RS resources fed back from the second terminal device to the first terminal device; or, configured to indicate a number of measurement results fed back from the second terminal device to the first terminal device.

31. The method according to any one of claims 14-29, further comprising:
obtaining, by the first terminal device, a fifth indication information; wherein the fifth indication information is configured to indicate a value of N.

32. The method according to claim 31, wherein the obtaining, by the first terminal device, a fifth indication information comprises:
obtaining, by the first terminal device, the fifth indication information according to a pre-configured information; or, receiving, by the first terminal device, the fifth indication information transmitted by a network device; or, receiving, by the first terminal device, the fifth indication information transmitted by the second terminal device; or, receiving, by the first terminal device, the fifth indication information transmitted by a third terminal device, wherein the third terminal device is a group head terminal of a communication group in which the first terminal device and the second terminal device are located.

33. The method according to claim 32, further comprising:
transmitting, by the first terminal device, a sixth indication information to the second terminal device; wherein the sixth indication information is configured to indicate a value of N.

34. The method according to any one of claims 15-29, wherein the measurement result comprises a sidelink RSRP and/or a sidelink SINR.

35. The method according to any one of claims 14-34, wherein the first information is carried through one of:
sidelink control information (SCI), media access control control element (MAC CE), sidelink feedback channel (PSFCH), and PC5-radio resource control (RRC) signaling.

36. The method according to any one of claims 14-35, wherein activation of sidelink feedback is indicated in a sidelink control information (SCI) to which the first information is associated.

37. The method according to any one of claims 14-36, further comprising:
selecting, by the first terminal device, a target CSI-RS resource according to the first information; wherein a spatial domain transmission filter corresponding to the target CSI-RS resource is the target spatial domain transmission filter.

38. The method according to claim 37, further comprising:
transmitting, by the first terminal device, a second sidelink configuration information to the second terminal device; wherein the second sidelink configuration information is configured to configure at least one transmission configuration indicator (TCI) state; the at least one TCI state comprises a first TCI state, and a reference signal included in the first TCI state is a CSI-RS corresponding to the target CSI-RS resource.

39. The method according to claim 38, wherein a quasi-common-location (QCL) type included in the first TCI state is QCL-TypeD.

40. The method according to claim 38 or 39, further comprising:
transmitting, by the first terminal device, a seventh indication information to the second terminal device; wherein the seventh indication information is configured to indicate the first TCI state.

41. The method according to any one of claims 37-40, further comprising:
transmitting, by the first terminal device, sidelink data to the second terminal device through the target spatial domain transmission filter.

42. The method according to any one of claims 14-41, wherein the receiving, by the first terminal device, a first information transmitted by the second terminal device comprises:
receiving, by the first terminal device, the first information transmitted by the second terminal device at a first time unit; wherein the first time unit is located after a second time unit determined based on a first delay boundary.

**43.** The method according to claim 42, further comprising:
transmitting, by the first terminal device, a third sidelink configuration information to the second terminal device; wherein the third configuration information is configured to configure a second delay boundary.

**44.** The method according to claim 43, wherein,
within a time range determined according to the second delay boundary, the first terminal device expects the second terminal device to perform a report or feedback regarding CSI-RS; and/or, outside a time range determined according to the second delay boundary, the first terminal device does not expect the second terminal device to perform a report or feedback regarding CSI-RS.

**45.** The method according to any one of claims 42-44, further comprising:

determining, by the first terminal device, the second time unit according to a fifth time unit and the first delay boundary;
wherein a time domain position of the fifth time unit is determined based on at least one of:

a time unit in which a first sidelink configuration information is located; wherein the first sidelink configuration information comprises at least one of: an index of a target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which a second sidelink configuration information is located; wherein the second sidelink configuration information is configured to configure at least one TCI state; the at least one TCI state comprises a first TCI state, and a reference signal included in the first TCI state is a CSI-RS corresponding to the target CSI-RS resource;
a time unit in which a first indication information is located; wherein the first indication information is configured to indicate at least one of: that the first terminal device will transmit the CSI-RSs for selecting the target spatial domain transmission filter; that the first terminal device will transmit the CSI-RSs through different spatial domain transmission filters; and a CSI report quantity; and
a time unit in which a second indication information is located; wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI.

**46.** The method according to claim 43 or 44, wherein the receiving, by the first terminal device, a first information transmitted by the second terminal device further comprises:
receiving, by the first terminal device, the first information transmitted by the second terminal device at a first time unit; wherein the first time unit is located before a sixth time unit determined based on the second delay boundary.

**47.** The method according to claim 46, further comprising:

determining, by the first terminal device, the sixth time unit according to a seventh time unit and the second delay boundary;
wherein the seventh time unit is determined based on one of:

a time unit in which a first sidelink configuration information is located; wherein the first sidelink configuration information comprises at least one of: an index of a target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which a second sidelink configuration information is located; wherein the second sidelink configuration information is configured to configure at least one TCI state; the at least one TCI state comprises a first TCI state, and a reference signal included in the first TCI state is a CSI-RS corresponding to the target CSI-RS resource;

a time unit in which a first indication information is located; wherein the first indication information is configured to indicate at least one of: that the first terminal device will transmit the CSI-RSs for selecting the target spatial domain transmission filter; that the first terminal device will transmit the CSI-RSs through different spatial domain transmission filters; and a CSI report quantity;

a time unit in which a second indication information is located; wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI; and

the second time unit.

48. The method according to any one of claims 1-13, further comprising:

receiving, by the first terminal device, a second information transmitted by the second terminal device; wherein, the second information is configured to indicate that the second terminal device does not detect any CSI-RS; or, the second information is configured to indicate that the second terminal device detects that measurement results corresponding to CSI-RSs are each lower than a first threshold value; or, the second information is configured to instruct that the first terminal device retransmits the M CSI-RSs.

49. The method according to claim 48, further comprising:
retransmitting, by the first terminal device, the M CSI-RSs to the second terminal device through the spatial domain transmission filter, respectively.

50. The method according to claim 48 or 49, wherein the receiving, by the first terminal device, a second information transmitted by the second terminal device comprises:
receiving, by the first terminal device, the second information transmitted by the second terminal device at a third time unit; wherein the third time unit is located after a fourth time unit determined based on a first delay boundary.

51. The method according to any one of claims 18, 20, 24, or 48, wherein the first threshold value is pre-configured or protocol-agreed; or, the first threshold value is configured by a network device; or, the first threshold value is configured by the first terminal device.

52. A wireless communication method, comprising:
receiving, by a second terminal device, M channel state information reference signals (CSI-RSs) transmitted by a first terminal device through a spatial domain transmission filter; wherein the M CSI-RSs are configured to select a target spatial domain transmission filter; the M CSI-RSs correspond to a plurality of CSI-RS resources in a target CSI-RS resource set, and M is a positive integer.

53. The method according to claim 52, wherein a corresponding repetition field in a configuration information of the target CSI-RS resource set has a first value;
the first value is configured to indicate that the first terminal device transmits the plurality of CSI-RS resources in the target CSI-RS resource set not through a same spatial domain transmission filter.

54. The method according to claim 52 or 53, further comprising:

receiving, by the second terminal device, a first sidelink configuration information transmitted by the first terminal device;
wherein the first sidelink configuration information comprises at least one of:

an index of the target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, a first delay boundary, a value of a repetition field corresponding to the target CSI-RS resource set; wherein the repetition field corresponding to the target CSI-RS resource set indicates that the first terminal device transmits the CSI-RSs not through a same spatial domain transmission filter in response to having a first value, and the repetition field corresponding to the target CSI-RS resource set indicates that the first terminal device transmits the CSI-RSs through a same spatial domain transmission filter in response to having a second value.

**55.** The method according to claim 54, wherein,
within the first delay boundary, the first terminal device does not expect the second terminal device to perform a report or feedback regarding CSI-RS; and/or, after exceeding the first delay boundary, the second terminal device is allowed to perform a report or feedback regarding CSI-RS; and/or, after exceeding the first delay boundary, the second terminal device does not expect the first terminal device to transmit CSI-RS; and/or, after exceeding the first delay boundary, the second terminal device stops receiving CSI-RS transmitted by the first terminal device.

**56.** The method according to any one of claims 52-55, further comprising:

receiving, by the second terminal device, a first indication information transmitted by the first terminal device; wherein the first indication information is configured to indicate at least one of:
that the first terminal device will transmit the CSI-RSs for selecting the target spatial domain transmission filter; that the first terminal device will transmit the CSI-RSs through different spatial domain transmission filters; and a CSI report quantity.

**57.** The method according to any one of claims 52-56, further comprising:

receiving, by the second terminal device, a second indication information transmitted by the first terminal device; wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI.

**58.** The method according to any one of claims 54-57, wherein the CSI report quantity comprises at least one of:
CSI-RS resource indicator (CRI), CRI and reference signal receiving power (RSRP), CRI and receiving signal strength indication (SINR), slot resource indication (SRI), SRI and RSRP, SRI and SINR, and None.

**59.** The method according to claim 54 or 55, wherein the first sidelink configuration information is carried through one of the following:
sidelink control information (SCI), media access control control element (MAC CE), and PC5-radio resource control (RRC) signaling.

**60.** The method according to claim 56, wherein the first indication information is carried through one of the following:
PC5-radio resource control (RRC) signaling, sidelink control information (SCI), media access control control element (MAC CE), and sidelink feedback information.

**61.** The method according to claim 57, wherein the second indication information is carried through one of the following:
PC5-radio resource control (RRC) signaling, sidelink control information (SCI), media access control control element (MAC CE), and sidelink feedback information.

**62.** The method according to claim 52 or 53, further comprising:
in condition of the first terminal device transmitting a CSI-RS to the second terminal device through a corresponding spatial domain transmission filter, receiving, by the second terminal device, a CSI-RS resource indication information corresponding to the CSI-RS carried by the first terminal device in a sidelink control information (SCI) associated with the CSI-RS.

**63.** The method according to claim 62, wherein the CSI-RS resource indication information corresponding to the CSI-RS comprises an index of a CSI-RS resource set corresponding to the CSI-RS and/or an index of the CSI-RS resource.

64. The method according to any one of claims 52-63, further comprising:

transmitting, by the second terminal device, a first information to the second terminal device;
wherein the first information comprises a target CSI report quantity, the target CSI report quantity comprising at least one of:

CSI-RS resource indicator (CRI), CRI and reference signal receiving power (RSRP), CRI and signal to interference plus noise ratio (SINR), slot resource indication (SRI), SRI and RSRP, and SRI and SINR; the SRI is configured to determine a slot corresponding to a CSI-RS transmitted by the first terminal device, or the SRI is configured to determine an index corresponding to a CSI-RS resource transmitted by the first terminal device.

65. The method according to claim 64, wherein,
the first information comprises or is configured to determine indexes of N CSI-RS resources; the N CSI-RS resources are determined by the second terminal device according to a measurement result obtained by performing a measurement on each of CSI-RSs received by the second terminal device, and N is a number of CSI-RS resources to be reported or fed back by the second terminal device; wherein N is a positive integer, and $N \leq M$.

66. The method according to claim 65, wherein the indexes of the N CSI-RS resources are arranged in an order of the measurement results corresponding to the N CSI-RS resources from high to low; or, the indexes of the N CSI-RS resources are arranged in an order of the measurement results corresponding to the N CSI-RS resources from low to high.

67. The method according to claim 65 or 66, wherein the first information further comprises a first measurement information for indicating the measurement results corresponding to the N CSI-RS resources.

68. The method according to claim 67, wherein the measurement results corresponding to the N CSI-RS resources are each greater than or equal to a first threshold value.

69. The method according to claim 67 or 68, wherein the N CSI-RS resources correspond to first N CSI-RSs of the CSI-RSs received by the second terminal device in an order of the corresponding measurement results from high to low.

70. The method according to any one of claims 65-67, wherein,

the N CSI-RS resources comprise N1 first-class CSI-RS resources and N2 second-class CSI-RS resources; wherein the N1 first-class CSI-RS resources correspond to CSI-RSs received by the second terminal device, or the N1 first-class CSI-RS resources correspond to CSI-RSs received by the second terminal device and with the corresponding measurement results that are each greater than or equal to a first threshold value; indexes corresponding to the N2 second-class CSI-RS resources are determined by at least one CSI-RS resource of the N1 first-class CSI-RS resources, or indexes corresponding to the N2 second-class CSI-RS resources are determined by at least one CSI-RS resource of the plurality of CSI-RS resources other than the N1 first-class CSI-RS resources, and the measurement results corresponding to the N2 second-class CSI-RS resources are each a default value; wherein N1 and N2 are each a positive integer, and N1+N2=N.

71. The method according to claim 67 or 68, wherein the first measurement information comprises a quantized index information of the measurement result corresponding to each of the N CSI-RS resources.

72. The method according to claim 67 or 68, wherein the first measurement information comprises a quantized index information of a first measurement result and N-1 differential quantized index information; the first measurement result corresponds to a highest value among the measurement results corresponding to the N CSI-RS resources.

73. The method according to claim 64, wherein,
the first information further comprises indexes of N3 CSI-RS resources, wherein the N3 CSI-RS resources are determined by the second terminal device according to a measurement result of each of CSI-RSs received by the second terminal device, N3 < N; N is a number of CSI-RS resources to be fed back or reported by the second terminal device, N3 and N are each a positive integer, and $N \leq M$.

74. The method according to claim 73, wherein the N3 CSI-RS resources correspond to the CSI-RSs received by the second terminal device, or, the N3 CSI-RS resources correspond to the CSI-RSs received by the second terminal device and having the corresponding measurement results each greater than or equal to a first threshold value.

75. The method according to claim 73 or 74, wherein the indexes of the N3 CSI-RS resources are in an order of the corresponding measurement results of the N3 CSI-RS resources from high to low; or, the indexes of the N3 CSI-RS resources are in an order of the corresponding measurement results of the N3 CSI-RS resources from low to high.

76. The method according to any one of claims 73-75, wherein the first information further comprises a second measurement information configured to indicate the measurement results corresponding to the N3 CSI-RS resources.

77. The method according to claim 76, wherein the second measurement information comprises a quantized index information of the measurement result corresponding to each of the N3 CSI-RS resources.

78. The method according to claim 76 or 77, wherein the second measurement information comprises a quantized index information of a second measurement result and N3-1 differential quantized index information; the second measurement result corresponds to a highest value among the measurement results corresponding to the N3 CSI-RS resources.

79. The method according to any one of claims 73-78, wherein the first information further comprises a third indication information configured to indicate a value of N3.

80. The method according to any one of claims 64-79, wherein the first information further comprises a fourth indication information configured to indicate a value of N; or, configured to indicate a number of CSI-RS resources fed back from the second terminal device to the first terminal device; or, configured to indicate a number of measurement results fed back from the second terminal device to the first terminal device.

81. The method according to any one of claims 64-79, further comprising:
obtaining, by the second terminal device, a sixth indication information; wherein the sixth indication information is configured to indicate a value of N.

82. The method according to claim 81, wherein the obtaining, by the second terminal device, a sixth indication information comprises:
obtaining, by the second terminal device, the sixth indication information according to a pre-configured information; or, receiving, by the second terminal device, the sixth indication information transmitted by a network device; or, receiving, by the second terminal device, the sixth indication information transmitted by the first terminal device; or, receiving, by the second terminal device, the sixth indication information transmitted by a third terminal device, wherein the third terminal device is a group head terminal of a communication group in which the first terminal device and the second terminal device are located.

83. The method according to any one of claims 65-79, wherein the measurement result comprises a sidelink RSRP and/or a sidelink SINR.

84. The method according to any one of claims 64-83, wherein the first information is carried through one of:
sidelink control information (SCI), media access control control element (MAC CE), sidelink feedback channel (PSFCH), and PC5-radio resource control (RRC) signaling.

85. The method according to any one of claims 64-84, wherein activation of sidelink feedback is indicated in a sidelink control information (SCI) to which the first information is associated.

86. The method according to any one of claims 64-85, further comprising:
receiving, by the second terminal device, a second sidelink configuration information transmitted by the first terminal device; wherein the second sidelink configuration information is configured to configure at least one transmission configuration indicator (TCI) state; the at least one TCI state comprises a first TCI state, and a reference signal included in the first TCI state is a CSI-RS corresponding to the target CSI-RS resource; the target CSI-RS resource is determined based on the first information, and a spatial domain transmission filter corresponding to the target CSI-RS resource is the target spatial domain transmission filter.

87. The method according to claim 86, wherein a quasi-common-location (QCL) type included in the first TCI state is QCL-TypeD.

88. The method according to claim 86 or 87, further comprising:
receiving, by the second terminal device, a seventh indication information transmitted by the first terminal device; wherein the seventh indication information is configured to indicate the first TCI state.

89. The method according to any one of claims 86-88, further comprising:
receiving, by the second terminal device, sidelink data transmitted by the first terminal device through the target spatial domain transmission filter.

90. The method according to any one of claims 64-89, wherein a first time unit for the first terminal device to receive the first information is located after a second time unit determined based on a first delay boundary.

91. The method according to claim 90, further comprising:
receiving, by the second terminal device, a third sidelink configuration information transmitted by the first terminal device; wherein the third configuration information is configured to configure a second delay boundary.

92. The method according to claim 91, wherein,
within a time range determined according to the second delay boundary, the first terminal device expects the second terminal device to perform a report or feedback regarding CSI-RS; and/or, outside a time range determined according to the second delay boundary, the first terminal device does not expect the second terminal device to perform a report or feedback regarding CSI-RS.

93. The method according to any one of claims 90-92, wherein,

the second time unit is determined according to a fifth time unit and the first delay boundary;
a time domain position of the fifth time unit is determined based on at least one of:

a time unit in which a first sidelink configuration information is located; wherein the first sidelink configuration information comprises at least one of: an index of a target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;
a time unit in which a second sidelink configuration information is located; wherein the second sidelink configuration information is configured to configure at least one TCI state; the at least one TCI state comprises a first TCI state, and a reference signal included in the first TCI state is a CSI-RS corresponding to the target CSI-RS resource;
a time unit in which a first indication information is located; wherein the first indication information is configured to indicate at least one of: that the first terminal device will transmit the CSI-RSs for selecting the target spatial domain transmission filter; that the first terminal device will transmit the CSI-RSs through different spatial domain transmission filters; and a CSI report quantity; and
a time unit in which a second indication information is located; wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI.

94. The method according to claim 91 or 92, wherein a first time unit for the first terminal device to receive the first information is located before a sixth time unit determined based on the second delay boundary.

95. The method according to claim 94, wherein,

the sixth time unit is determined according to a seventh time unit and the second delay boundary;
the seventh time unit is determined based on one of:

a time unit in which a first sidelink configuration information is located; wherein the first sidelink configuration information comprises at least one of: an index of a target CSI-RS resource set, indexes of the plurality of CSI-RS resources included in the target CSI-RS resource set, a number of the plurality of CSI-RS resources included in the target CSI-RS resource set, a value of M, a correspondence between a CSI-RS resource set and a CSI report quantity, a number of CSI-RS resources reported or fed back by the second terminal device to the first terminal device, the first delay boundary, a value of a repetition field corresponding to the target CSI-RS resource set;

a time unit in which a second sidelink configuration information is located; wherein the second sidelink configuration information is configured to configure at least one TCI state; the at least one TCI state comprises a first TCI state, and a reference signal included in the first TCI state is a CSI-RS corresponding to the target CSI-RS resource;

a time unit in which a first indication information is located; wherein the first indication information is configured to indicate at least one of: that the first terminal device will transmit the CSI-RSs for selecting the target spatial domain transmission filter; that the first terminal device will transmit the CSI-RSs through different spatial domain transmission filters; and a CSI report quantity;

a time unit in which a second indication information is located; wherein the second indication information is configured to indicate that the CSI-RSs transmitted by the first terminal device are configured to select a spatial domain transmission filter for sidelink data transmission by the first terminal device; or, the second indication information is configured to indicate that the CSI-RSs transmitted by the first terminal device are configured to select a spatial domain reception filter for sidelink data reception by the second terminal device; or, the second indication information is configured to indicate that the CSI-RSs transmitted by the first terminal device are configured to measure a CSI; and

the second time unit.

96. The method according to any one of claims 52-63, further comprising:

transmitting, by the second terminal device, a second information to the first terminal device; wherein, the second information is configured to indicate that the second terminal device does not detect any CSI-RS; or, the second information is configured to indicate that the second terminal device detects that measurement results corresponding to CSI-RSs are each lower than a first threshold value; or, the second information is configured to instruct that the first terminal device retransmits the M CSI-RSs.

97. The method according to claim 96, further comprising:
receiving, by the second terminal device, the M CSI-RSs resent by the first terminal device through the spatial domain transmission filter, respectively.

98. The method according to any one of claims 68, 70, 74, or 96, wherein the first threshold value is pre-configured or protocol-agreed; or, the first threshold value is configured by a network device; or, the first threshold value is configured by the first terminal device.

99. A terminal device, being a first terminal device, **characterized by** comprising:

a communication unit, configured to transmit M channel state information reference signals (CSI-RSs) to a second terminal device through a spatial domain transmission filter; wherein the M CSI-RSs are configured to select a target spatial domain transmission filter;
wherein the M CSI-RSs correspond to a plurality of CSI-RS resources in a target CSI-RS resource set, and M is a positive integer.

100. A wireless communication method, being a second terminal device, comprising:
a communication unit, configured to receive M channel state information reference signals (CSI-RSs) transmitted by a first terminal device through a spatial domain transmission filter; wherein the M CSI-RSs are configured to select a target spatial domain transmission filter; the M CSI-RSs correspond to a plurality of CSI-RS resources in a target CSI-RS resource set, and M is a positive integer.

101. A terminal device, comprising a processor and a memory; wherein the memory is configured to store a computer program, and the processor is configured to call and run the computer program stored in the memory to perform the method according to any one of claims 1-51 or the method according to any one of claims 52-98.

102. A chip, comprising a processor configured to call and run a program from a memory, to cause a device arranged with the chip to perform the method according to any one of claims 1-51 or the method according to any one of claims 52-98.

103. A computer-readable storage medium, storing a computer program; wherein the computer program is configured to be executed by a computer to perform the method according to any one of claims 1-51 or the method according to any one of claims 52-98.

104. A computer program product, comprising a computer program instruction; wherein the computer program instruction is configured to be executed by a computer to perform the method according to any one of claims 1-51 or the method according to any one of claims 52-98.

105. A computer program, configured to be executed by a computer to perform the method according to any one of claims 1-51 or the method according to any one of claims 52-98.

FIG. 1

FIG. 2

FIG. 3

Base station

FIG. 4

Base station

Sidelink

FIG. 5

UE1

Resource allocation

Resource allocation

UE2

UE3

Sidelink

FIG. 6

UE1

UE2

Data

FIG. 7

FIG. 8

FIG. 9

(a)

(b)

FIG. 10

LTE/NR without
analog beams

All time

1

2

3

5

4

Terminal

（a）

LTE/NR with analog
beams

Time 1

Time 2    Time 3

Time 4

1

2

3

5

4

Terminal

（b）

FIG. 11

RRC

| N candidate TCI states |

MAC

| K activated TCI states |

DCI

| 1/2 used TCI states |

FIG. 12

**200**

transmitting, by a first terminal device, M CSI-RSs to a second terminal device through a spatial domain transmission filter; where the M CSI-RSs are configured to select a target spatial domain transmission filter; the M CSI-RSs correspond to multiple CSI-RS resources in a target CSI-RS resource set, and M is a positive integer

S210

receiving, by the second terminal device, the M CSI-RSs sent through the spatial domain transmission filter by the first terminal device

S220

FIG. 13

First terminal
device

Second terminal
device

FIG. 14

Spatial domain
transmission filter
0 sending CSI-RS
0

Spatial domain
transmission filter
1 sending CSI-RS
1

Spatial domain
transmission filter
2 sending CSI-RS
2

Spatial domain
transmission filter
3 sending CSI-RS
3

| 0 | 1 | 2 | 3 | 4 | 5 | 6 | 7 | 8 | 9 | 10 | 11 | 12 | 13 | 14 | 15 |

First terminal device sends
sidelink configuration
information to second
terminal device

First terminal device sends
CSI-RS in turn with different
spatial domain transmission
filters

Second terminal device feeds back
CSI-RS resources and measurement
results to first terminal device

FIG. 15

| CSI-RS resource 2 | CSI-RS resource 3 | CSI-RS resource 1 |
| --- | --- | --- |

FIG. 16

| CSI-RS resource 1 | CSI-RS resource 3 | CSI-RS resource 2 |
| --- | --- | --- |

FIG. 17

| CSI-RS resource 1 | CSI-RS resource 2 | CSI-RS resource 1 |
| --- | --- | --- |

FIG. 18

| CSI-RS resource 1 | CSI-RS resource 2 | CSI-RS resource 1 | CSI-RS resource 2 |
|---|---|---|---|

FIG. 19

| CSI-RS resource 2 | RSRP2=-20dbm | CSI-RS resource 0 | RSRP0=default value |
|---|---|---|---|

FIG. 20

| CSI-RS resource 1 | RSRP1=-10dbm | CSI-RS resource 2 | RSRP2=-20dbm | CSI-RS resource 1 | RSRP1=default value |
|---|---|---|---|---|---|

FIG. 21

**(a)**

| N3=3 | CSI-RS k1 | RSRP k1 | Oct 1 |
|---|---|---|---|
| RSRP k1 | CSI-RS k2 | RSRP k2 | Oct 2 |
| RSRP k2 | CSI-RS k3 | RSRP k3 | Oct 3 |
| RSRP k3 | R | R | R | Oct 4 |

**(b)**

| N3=2 | CSI-RS k1 | RSRP k1 | Oct 1 |
|---|---|---|---|
| RSRP k1 | CSI-RS k2 | RSRP k2 | Oct 2 |
| RSRP k2 | R | R | R | R | Oct 3 |

**(c)**

| N3=1 | CSI-RS k1 | RSRP k1 | Oct 1 |
|---|---|---|---|
| RSRP k1 | R | R | R | R | R | Oct 2 |

**(d)**

| N3=0 | R | R | R | R | R | R | Oct 1 |
|---|---|---|---|---|---|---|---|

FIG. 22

(a)

| N3=3 | CSI-RS k1 | RSRP k1 | | Oct 1 |
| RSRP k1 | | CSI-RS k2 | D-RSRP k2 | Oct 2 |
| D-RSRP k2 | CSI-RS k3 | D-RSRP k3 | R | Oct 3 |

(b)

| N3=2 | CSI-RS k1 | RSRP k1 | | | | | | Oct 1 |
| RSRP k1 | | CSI-RS k2 | D-RSRP k2 | | | | | Oct 2 |
| D-RSRP k2 | R | R | R | R | R | R | R | Oct 3 |

(c)

| N3=1 | CSI-RS k1 | RSRP k1 | | | | | Oct 1 |
| RSRP k1 | | R | R | R | R | R | Oct 2 |

(d)

| N3=0 | R | R | R | R | R | R | Oct 1 |

FIG. 23

First terminal device        Second terminal device

S10

S11

S12

S13

S14

S15

S16

FIG. 24

Terminal device 300

Communication unit 310

Processing unit 320

FIG. 25

Terminal device 400

Communication unit 410

FIG. 26

Communication device
500

Memory
520

Processor
510

Transceiver
530

FIG. 27

Apparatus 600

Input
interface
630

Processor
610

Memory
620

Output
interface
640

FIG. 28

Communication
system 700

First terminal
device

710

Second terminal
device

720

FIG. 29

<div align="center">

**INTERNATIONAL SEARCH REPORT**

</div>

| | International application No. |
|---|---|
| | **PCT/CN2021/142916** |

| **A. CLASSIFICATION OF SUBJECT MATTER** |
|---|
| H04L 5/00(2006.01)i;  H04W 76/27(2018.01)i |
| According to International Patent Classification (IPC) or to both national classification and IPC |

| **B. FIELDS SEARCHED** |
|---|
| Minimum documentation searched (classification system followed by classification symbols) |
| H04L; H04W |
| Documentation searched other than minimum documentation to the extent that such documents are included in the fields searched |
| Electronic data base consulted during the international search (name of data base and, where practicable, search terms used) |
| CNABS; CNTXT; VEN; WOTXT; USTXT; EPTXT; CNKI; 3GPP: 侧行链路, 侧链, 副链, 毫米波, 波束赋形, 信道状态信息 参考信号, 参考信号, 最优, 目标, 空域发送滤波器, 空间关系, 测量, 反馈, 资源指示, 接收功率, sidelink, SL, beam forming, CSI-RS, PRS, target, spatial domain transmission filter, spatial relation, resource, CRI, RSRP |

| **C. DOCUMENTS CONSIDERED TO BE RELEVANT** | | |
|---|---|---|
| Category* | Citation of document, with indication, where appropriate, of the relevant passages | Relevant to claim No. |
| A | CN 111769921 A (SHANGHAI LANGBO COMMUNICATION TECHNOLOGY CO., LTD.) 13 October 2020 (2020-10-13) description, paragraphs [0087]-[0446] | 1-105 |
| A | CN 111148232 A (VIVO COMMUNICATION TECHNOLOGY CO., LTD.) 12 May 2020 (2020-05-12) entire document | 1-105 |
| A | CN 112534750 A (FG INNOVATION CO., LTD.) 19 March 2021 (2021-03-19) entire document | 1-105 |
| A | CN 110535593 A (ZTE CORP.) 03 December 2019 (2019-12-03) entire document | 1-105 |
| A | NOKIA. "Editorial Corrections for 38.214" *3GPP TSG-RAN WG1 Meeting #104-e R1-2102235,* 08 February 2021 (2021-02-08), entire document | 1-105 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2022** | **13 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/142916**

| Patent document cited in search report | | | Publication date (day/month/year) | Patent family member(s) | | | Publication date (day/month/year) |
|---|---|---|---|---|---|---|---|
| CN | 111769921 | A | 13 October 2020 | WO | 2020199977 | A1 | 08 October 2020 |
| | | | | US | 2021068117 | A1 | 04 March 2021 |
| | | | | CN | 111769921 | B | 24 December 2021 |
| CN | 111148232 | A | 12 May 2020 | US | 2021250936 | A1 | 12 August 2021 |
| | | | | AU | 2019371949 | A1 | 24 June 2021 |
| | | | | WO | 2020088315 | A1 | 07 May 2020 |
| | | | | CA | 3118244 | A1 | 07 May 2020 |
| | | | | KR | 20210076101 | A | 23 June 2021 |
| | | | | EP | 3876630 | A1 | 08 September 2021 |
| | | | | SG | 11202104581 | A1 | 29 June 2021 |
| | | | | IN | 202127024519 | A | 13 August 2021 |
| | | | | VN | 80137 | A | 25 August 2021 |
| | | | | CN | 111148232 | B | 22 October 2021 |
| CN | 112534750 | A | 19 March 2021 | US | 2020052843 | A1 | 13 February 2020 |
| | | | | WO | 2020030056 | A1 | 13 February 2020 |
| | | | | EP | 3834315 | A1 | 16 June 2021 |
| | | | | US | 11050535 | B2 | 29 June 2021 |
| CN | 110535593 | A | 03 December 2019 | WO | 2020063958 | A1 | 02 April 2020 |

Form PCT/ISA/210 (patent family annex) (January 2015)